(19) Europäisches Patentamt
European Patent Office
Office européen des brevets

(11) **EP 3 585 592 B1**

(12) **EUROPÄISCHE PATENTSCHRIFT**

(45) Veröffentlichungstag und Bekanntmachung des Hinweises auf die Patenterteilung:
**20.03.2024   Patentblatt 2024/12**

(21) Anmeldenummer: **18719858.5**

(22) Anmeldetag: **24.04.2018**

(51) Internationale Patentklassifikation (IPC):
**B29C 64/153** (2017.01)   **B22F 3/105** (2006.01)

(52) Gemeinsame Patentklassifikation (CPC):
**B29C 64/153; B22F 10/28; B22F 10/36; B22F 10/366; B29C 64/386; B33Y 10/00;** B22F 12/13; B22F 12/44; B33Y 50/00; C04B 2235/6026; C04B 2235/665; Y02P 10/25

(86) Internationale Anmeldenummer:
**PCT/EP2018/060398**

(87) Internationale Veröffentlichungsnummer:
**WO 2018/197443 (01.11.2018 Gazette 2018/44)**

(54) **HOMOGENISIERUNG DES ENERGIEEINTRAGS**

HOMOGENISATION OF THE ENERGY INPUT

HOMOGÉNÉISATION DE L'APPORT ÉNERGÉTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.04.2017   DE 102017207264**

(43) Veröffentlichungstag der Anmeldung:
**01.01.2020   Patentblatt 2020/01**

(73) Patentinhaber: **EOS GmbH Electro Optical Systems**
**82152 Krailling (DE)**

(72) Erfinder:
• **EDELHÄUSER, Sebastian**
**85604 Zorneding (DE)**
• **HÜMMELER, Ludger**
**82131 Gauting (DE)**
• **HOFBAUER, Peter**
**81249 München (DE)**
• **SCHMITT, Christopher**
**81549 München (DE)**

(74) Vertreter: **Prüfer & Partner mbB**
**Patentanwälte · Rechtsanwälte**
**Sohnckestraße 12**
**81479 München (DE)**

(56) Entgegenhaltungen:
WO-A1-2015/091875    DE-A1- 10 042 134
DE-A1- 19 606 128

• Ho Yeung ET AL: "LASER PATH PLANNING AND POWER CONTROL STRATEGIES FOR POWDER BED FUSION SYSTEMS", Proceedings of the 27th Annual International Solid Freeform Fabrication Symposium, 1. August 2016 (2016-08-01), XP055492295, Gefunden im Internet: URL:https://www.researchgate.net/profile/Brandon_Lane/publication/310152847_LASER_PATH_PLANNING_AND_POWER_CONTROL_STRATEGIES_FOR_POWDER_BED_FUSION_SYSTEMS/links/5829bb6108ae911e2a32701b/LASER-PATH-PLANNING-AND-POWER-CONTROL-STRATEGIES-FOR-POWDER-BED-FUSION-SYSTEMS.pdf?origin=publication_detail [gefunden am 2018-07-12]

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 585 592 B1

**Beschreibung**

Die Erfindung betrifft ein Verfahren und eine Vorrichtung zur Bereitstellung von Steuerdaten für eine generative Schichtbauvorrichtung, ein entsprechend angepasstes generatives Schichtbauverfahren, eine entsprechend angepasste generative Schichtbauvorrichtung, ein entsprechend angepasstes Computerprogramm und ein computerlesbares Speichermedium, auf dem das Computerprogramm gespeichert ist.

Generative Schichtbauvorrichtungen und zugehörige Verfahren sind allgemein dadurch charakterisiert, dass in ihnen Objekte durch Verfestigen eines formlosen Aufbaumaterials Schicht für Schicht hergestellt werden. Die Verfestigung kann beispielsweise herbeigeführt werden mittels Zufuhr von Wärmeenergie zum Aufbaumaterial durch Bestrahlen desselben mit elektromagnetischer Strahlung oder Teilchenstrahlung (z.B. Lasersintern (SLS) oder Laserschmelzen oder Elektronenstrahlschmelzen) oder aber durch Herbeiführen einer Vernetzungsreaktion im Aufbaumaterial (z.B. Stereolithographie). Die ursprünglich im Prototypenbau eingesetzten Vorrichtungen und Verfahren werden zunehmend für die Serienfertigung eingesetzt, wofür sich der Begriff "Additive Manufacturing" eingebürgert hat.

Damit bei generativen Schichtbauverfahren die Objekte mit hoher Präzision hergestellt werden können, ist es wichtig, dass das Aufbaumaterial innerhalb jeder der Schichten möglichst gleichförmig verfestigt wird. Diesem Problem widmet sich WO 2015/091875 A1 auf dem Gebiet des Elektronenstrahlschmelzens. Insbesondere geht es dabei um das Abtasten eines Objektquerschnitts mit dem Elektronenstrahl in zueinander parallelen Abtastlinien (Scanlinien). Durch diese Form der Abtastung des Aufbaumaterials innerhalb des Objektquerschnitts wird der Objektquerschnitt ähnlich wie beim Schraffieren einer Fläche über das Aufbaumaterial bewegt, weshalb diese Art des Richtens des Elektronenstrahls auf das Aufbaumaterial im Fachjargon auch als "Hatchen" bezeichnet wird.

In WO 2015/091875 A1 wird festgestellt, dass die dem Material zugeführte Energiemenge davon abhängt, ob die Scanlinien lang oder kurz sind. Für lange Scanlinien wird eine zu geringe zugeführte Energiemenge beobachtet, während für kurze Scanlinien eine zu hohe zugeführte Energiemenge beobachtet wird. Zur Lösung des Problems schlägt WO 2015/091875 A1 vor, die Abtastzeit des Materials entlang der bei der Schraffur des Objektquerschnitts auftretenden längsten Scanlinie zu bestimmen und für alle kürzeren Scanlinien eine Wartezeit vor oder nach dem Abtasten der Scanlinie einzufügen, so dass die Summe aus Abtastzeit einer Scanlinie und Wartezeit stets der Abtastzeit für die längste Scanlinie entspricht.

In DE 196 06 128 A1 wird zum Erreichen einer homogenen Dichteverteilung in einer zu verfestigenden Schicht eines mittels Lasersinterns herzustellenden dreidimensionalen Objektes ein Laserstrahl entlang der Oberfläche der zu verfestigenden Schicht geführt, wobei die Geschwindigkeit, mit der der Strahl geführt wird, in Abhängigkeit von der Länge von Linien eines Linienmusters variiert.

In DE 100 42 134 A1 wird ein Verfahren zur Herstellung von dreidimensionalen Sinterwerkstücken offenbart, wobei eine nacheinander abfolgende Bestrahlung von Einzelabschnitten in jeder Schicht des Werkstücks derart erfolgt, daß der auftretende Wärmeeintrag in jeder Schicht weitgehend gleichmäßig ist.

Das Vorgehen nach WO 2015/091875 A1 ist geeignet, für ein homogeneres Aufschmelzverhalten beim Elektronenstrahlschmelzen zu sorgen. Ein Nachteil dieses Verfahrens ist jedoch, dass durch die Einfügung von Wartezeiten der Herstellungsvorgang verlängert wird, was insbesondere im Bereich des "Additive Manufacturing" von Nachteil ist, da dort größere Stückzahlen möglichst innerhalb einer geringeren Fertigungszeit hergestellt werden sollen. Angesichts der oben dargestellten Problematik ist es eine Aufgabe der vorliegenden Erfindung, ein Verfahren und eine Vorrichtung bereitzustellen, mittels derer Objekte mittels eines generativen Schichtbauverfahrens, insbesondere eines "Additive Manufacturing"-Verfahrens, in kurzer Zeit mit hoher Qualität hergestellt werden können.

Die Aufgabe wird gelöst durch ein computergestütztes Verfahren nach Anspruch 1, ein generatives Schichtbauverfahren nach Anspruch 7, eine Vorrichtung nach Anspruch 8, eine generative Schichtbauvorrichtung nach Anspruch 10, ein Computerprogramm nach Anspruch 11 und ein computerlesbares Speichermedium nach Anspruch 12. Weiterbildungen der Erfindung werden in den abhängigen Ansprüchen beansprucht. Insbesondere kann eine erfindungsgemäße Vorrichtung auch durch untenstehend bzw. in den abhängigen Ansprüchen gekennzeichnete Merkmale der erfindungsgemäßen Verfahren weitergebildet sein und umgekehrt. Ferner können die im Zusammenhang mit einer erfindungsgemäßen Vorrichtung beschriebenen Merkmale auch zur Weiterbildung einer anderen erfindungsgemäßen Vorrichtung benutzt werden, selbst wenn dies nicht explizit angegeben wird.

Ein erfindungsgemäßes computergestütztes Verfahren zur Bereitstellung von Steuerdaten für eine generative Schichtbauvorrichtung zur Herstellung eines dreidimensionalen Objekts,
wobei das Objekt mittels der generativen Schichtbauvorrichtung hergestellt wird durch Aufbringen eines Aufbaumaterials Schicht auf Schicht und Verfestigen des Aufbaumaterials mittels Zufuhr von Strahlungsenergie zu allen Stellen in einer Schicht, die dem Querschnitt des Objekts in dieser Schicht entsprechen, indem diese Stellen mittels einer Energieeintragseinrichtung dergestalt mit Energiestrahlung abgetastet werden, dass die Energieeintragseinrichtung mindestens ein Energiestrahlbündel so auf vorgegebene Stellen einer Schicht des Aufbaumaterials richtet, dass durch das Energiestrahlbündel eine Verfestigung des Aufbaumaterials bewirkt wird, weist einen ersten Schritt S1 des Zugriffs auf einen Datensatz auf, der ein Datenmodell einer Anzahl von während der Herstellung selektiv zu verfestigenden Aufbaumaterialschichten aufweist, wobei in jeder der Schichten des Datenmodells einem Objektquerschnitt entsprechende Stellen gekennzeichnet sind, an denen eine Verfestigung des Aufbaumaterials stattfinden soll (soweit in dieser Schicht vorgesehen bzw. vorhanden), wobei in dem Datensatz in zumindest einer, bevorzugt allen, der Schichten des Datenmodells zumindest für einen Teilbereich eines Objektquerschnitts spezifiziert ist, in welcher zeitlichen Reihenfolge ein Energiestrahlbündel in, bevorzugt parallelen, Scanlinien über die Stellen dieses Teilbereichs zur Abtastung des Aufbaumaterials zu bewegen ist.

Das Verfahren ist unter anderem dadurch gekennzeichnet, dass in einem zweiten Schritt der Datensatz so abgeändert wird, dass in zumindest einer, bevorzugt allen, der Schichten des Datenmodells für den jeweiligen Teilbereich eines Objektquerschnitts abgeprüft wird, ob die für die Abtastung des Aufbaumaterials entlang einer Scanlinie benötigte Abtastzeit eine vorgegebene Mindestzeitdauer $t_{min}$ unterschreitet und falls dies für eine Scanlinie festgestellt wird, entweder eine verringerte Energiedichte des Energiestrahlbündels während der Abtastung des Aufbaumaterials entlang dieser Scanlinie spezifiziert wird und/oder nach dem Abtasten entlang der Scanlinie eine Wartezeit spezifiziert wird, bevor das Energiestrahlbündel entlang einer weiteren Scanlinie bewegt wird, wobei die verringerte Energiedichte des Energiestrahlbündels so spezifiziert wird, dass eine umso geringere Energiedichte des Energiestrahlbündels spezifiziert wird, je stärker die vorgegebene Mindestzeitdauer unterschritten wird, und in einem dritten Schritt S3 der im zweiten Schritt abgeänderte Datensatz für die Generierung eines Steuerdatensatz für die generative Schichtbauvorrichtung bereitgestellt wird. Generative Schichtbauvorrichtung und -verfahren, auf die sich die vorliegende Erfindung bezieht, sind insbesondere solche, bei denen Energie als elektromagnetische Strahlung oder Teilchenstrahlung selektiv auf eine Schicht des Aufbaumaterials aufgebracht wird, um dadurch das Aufbaumaterial zu erwärmen. Hierfür kann die Energieeintragseinrichtung beispielsweise einen Laser oder eine Elektronenstrahlquelle aufweisen. Dabei wird das Aufbaumaterial mittels der durch die Strahlung eingebrachten Energie teilweise oder vollständig aufgeschmolzen, wodurch sich die Bestandteile des Aufbaumaterials (beispielsweise Pulverkörner) miteinander verbinden. Nach seiner Abkühlung liegt das Aufbaumaterial dann als Festkörper vor. Da die Übergänge zwischen oberflächlichem Aufschmelzen (Sintern) und vollständigem Aufschmelzen (Schmelzen) fließend sind, werden die Begriffe "Sintern" und "Schmelzen" in der vorliegenden Anmeldung synonym verwendet und nicht zwischen Sintern und Schmelzen unterschieden.

Als Aufbaumaterial in einem erfindungsgemäßen generativen Schichtbauverfahren können verschiedene Materialien verwendet werden, vorzugsweise Pulver oder Pasten bzw. Gele, insbesondere Metallpulver, aber auch Kunststoffpulver, Keramikpulver oder Sand, wobei auch die Verwendung von gefüllten oder gemischten Pulvern möglich ist.

Der Begriff "Strahlbündel" soll zum Ausdruck bringen, dass nicht nur Strahlen umfasst sind, die beim Auftreffen auf das Aufbaumaterial einen kleinen Querschnitt aufweisen, sondern ebenfalls Strahlen, die z.B. einen linienförmigen Querschnitt aufweisen oder gar Strahlung, die gleichzeitig in einen größeren Bereich des Aufbaumaterials (also flächig) eingetragen wird. In jedem Fall, insbesondere jedoch wenn der Energieeintrag flächig erfolgt, bezieht sich eine für das entsprechende Energiestrahlbündel spezifizierte Energiedichte stets auf die über die Auftrefffläche gemittelte Energiedichte. Weiterhin spielt es für die vorliegende Erfindung keine weitere Rolle, ob die Energieeintragseinrichtung ein oder mehrere Energiestrahlbündel nacheinander oder gleichzeitig auf das Aufbaumaterial richten kann, sofern benachbarte Scanlinien zeitlich nacheinander abgetastet werden. Insbesondere lässt sich die vorliegende Erfindung aber beim Vorhandensein lediglich eines Energiestrahlbündels vorteilhaft anwenden.

Es sei an dieser Stelle bemerkt, dass mittels einer erfindungsgemäßen generativen Schichtbauvorrichtung nicht nur ein Objekt, sondern auch mehrere Objekte gleichzeitig hergestellt werden können. Wenn in der vorliegenden Anmeldung an einer Stelle von der Herstellung eines Objektes die Rede ist, dann versteht es sich, dass die jeweilige Beschreibung in gleicher Weise auch auf generative Schichtbauverfahren und -vorrichtungen anwendbar ist, bei denen mehrere Objekte gleichzeitig hergestellt werden. Ferner sei an dieser Stelle vermerkt, dass in der vorliegenden Anmeldung der Begriff "Anzahl" stets im Sinne von "ein oder mehrere" zu verstehen ist.

Als Steuerdatensatz (oft auch als Steuerbefehlssatz bezeichnet) wird hier eine Abfolge von Anweisungen angesehen, Schichten des Aufbaumaterials nacheinander aufzutragen und Bereiche der jeweiligen Schichten, die dem Querschnitt eines herzustellenden Objektes entsprechen, mit Energiestrahlung zu bestrahlen, um das Aufbaumaterial zu verfestigen.

Im Detail basiert ein Steuerdatensatz auf einem computerbasierten Modell des oder der herzustellenden Objekte, bevorzugt einem CAD-Volumenmodell. Der Steuerdatensatz legt für jede Aufbaumaterialschicht während der Herstellung die Stellen, an denen durch Strahlungszufuhr eine Verfestigung des Aufbaumaterials bewirkt werden soll, fest. Des Weiteren spezifiziert ein Steuerdatensatz oftmals auch die Dicke des Schichtauftrags und enthält darüberhinaus oftmals auch herstellungsspezifische Informationen, beispielsweise bezüglich der Lage und Orientierung der Objekte in der generativen Schichtbauvorrichtung oder bezüglich eines Durchmessers des Energiestrahlbündels beim Auftreffen auf das Aufbaumaterial. In der Regel enthält der Steuerdatensatz alle zur Steuerung der Energieeintragseinrichtung erforderlichen Daten, wodurch unter anderem die Energiedichte der Energiestrahlung und ggf. die Verfahrgeschwindigkeit des Strahlbündels über das Aufbaumaterial festgelegt werden.

Der Steuerdatensatz kann somit als Gesamtheit aller für die Steuerung des Herstellungsvorgangs in einer generativen Schichtbauvorrichtung vorgegebenen Steuerdaten angesehen werden, der Steuerdatensatz kann jedoch auch mindestens einen Teil dieser Gesamtheit umfassen. Die auf eine einzelne Schicht bezogenen Steuerdaten werden dabei auch als Schichtdatensatz bezeichnet. Ein Schichtdatensatz ist also ein Datensatz, der ein Datenmodell einer während des Herstellungsverfahrens an den Stellen eines Objektquerschnitts zu verfestigenden Aufbaumaterialschicht enthält. Solch ein Schichtdatensatz wird in der Regel durch Zerlegen eines CAD-Volumenmodells des herzustellenden Objekts in Schichten (im Fachjargon als "slicing" bezeichnet) erhalten. Es ist aber auch denkbar, eine zweidimensionale Repräsentation des in einer Schicht mittels eines oder mehrerer Strahlen zu verfestigenden Objektquerschnitts auf anderweitige Weise aus dem computerbasierten CAD-Modell des Objekts zu extrahieren. In dem Schichtdatensatz können, müssen aber nicht, noch weitere Informationen hinsichtlich der Herstellung des Objektquerschnitts enthalten sein, z.B. die Schichtdicke, der Durchmesser eines auf das Aufbaumaterial auftreffenden Strahlbündels, etc.

Wenn von einem Zugriff auf einen Datensatz die Rede ist, dann ist damit gemeint, dass der Datensatz aus einem Speicher ausgelesen wird oder aber die dem Datensatz entsprechenden Daten über ein Netzwerk entgegengenommen werden. Dabei müssen nicht zwangsläufig die Datenmodelle einer Mehrzahl von während der Herstellung selektiv zu verfestigenden Aufbaumaterialschichten gemeinsam (also gleichzeitig) eingelesen werden. Es ist auch möglich, dass es einen größeren zeitlichen Abstand zwischen den Zugriffsvorgängen auf die Datenmodelle unterschiedlicher Schichten gibt, beispielsweise das Datenmodell einer Aufbaumaterialschicht (ein Schichtdatensatz) jeweils bei Bedarf während eines Herstellungsvorgangs eines Objekts eingelesen wird und ein abgeänderter Datensatz für die Aufbaumaterialschicht dann während des Herstellungsvorgangs in den Steuerdatensatz integriert wird.

Gemäß dem zweiten Schritt abgeänderte Datensätze müssen nicht einzeln für einen generativen Schichtbauvorgang bereitgestellt werden. Vielmehr können auch mehrere abgeänderte Datensätze zunächst gesammelt und anschließend in ihrer Gesamtheit zur Integration in einen Steuerdatensatz bereitgestellt werden.

Durch das erfindungsgemäße Vorgehen gelingt es, den Energieeintrag in eine Aufbaumaterialschicht homogener zu gestalten, ohne zwingend Wartezeiten einfügen zu müssen, die den Herstellungsvorgang in nachteiliger Weise verlängern, da jeweils eine gewisse Zeitdauer (die Wartezeit) abgewartet wird, bevor die in der zeitlichen Reihenfolge nächste Scanlinie abgetastet wird. Insbesondere wird erfindungsgemäß erst bei Unterschreiten einer vorgegebenen Mindestzeitdauer für die Abtastung einer Scanlinie die Energiedichte des für die Abtastung verwendeten Energiestrahlbündels verringert. Die Erfinder haben die Erfahrung gemacht, dass oberhalb einer gewissen Länge der Scanlinien bzw. einer gewissen Mindestdauer für die Abtastung einer Scanlinie Auswirkungen des in dieser Scanlinie in das Material eingebrachten Energiebetrags auf das Aufschmelzverhalten beim Abtasten einer Nachbar-Scanlinie vernachlässigt werden können. Wenn Wartezeiten nur bei Unterschreiten einer Mindestzeitdauer für die Abtastung einer Scanlinie eingefügt werden, so verringert dies die Herstellungszeit, da nur in Bereichen mit kurzen Scanlinien Wartezeiten eingefügt werden müssen. Insbesondere kann man auch bei Verringern der Energiedichte des Energiestrahlbündels vollkommen auf Wartezeiten verzichten. Unter einer "verringerten Energiedichte" wird erfindungsgemäß stets eine Energiedichte (Energie pro Flächeneinheit) verstanden, die einen geringeren Wert hat als eine Energiedichte eines Energiestrahlbündels, das entlang einer Scanlänge so bewegt wird, dass die hierfür benötigte Zeitdauer (die Abtastzeit tA) größer oder gleich der vorgegebenen Mindestzeitdauer ist. Beispielsweise kann vorgesehen sein, dass die Energiedichte für Abtastzeiten größer der Mindestzeitdauer stets mindestens einer gewissen Norm-Energiedichte EN entspricht.

Es sei hier auch hervorgehoben, dass erfindungsgemäß die Energiedichte des Energiestrahlbündels verringert wird und nicht etwa die Wärmezufuhr allein durch eine schnellere Bewegung des Energiestrahlbündels entlang einer Scanlinie verringert wird. Die Erfinder haben festgestellt, dass bei einer schnelleren Bewegung des Energiestrahlbündels zwar theoretisch die Wärmezufuhr in das Aufbaumaterial sich verringern sollte, jedoch die schnellere Bewegung des Energiestrahlbündels bewirkt, dass der Energiestrahl nach kürzerer Zeit wieder an einer zu verfestigenden Stelle angelangt ist, die benachbart zu einer kurz vorher verfestigten Stelle ist. Durch die schnellere Bewegung des Energiestrahlbündels wird also keinesfalls für ein homogeneres Aufschmelzen des Aufbaumaterials gesorgt.

Bevorzugt wird im zweiten Schritt abgeprüft, ob bei zwei nebeneinander liegenden Scanlinien die vorgegebene Mindestzeitdauer unterschiedlich stark unterschritten wird und falls dies der Fall ist, abgeprüft, welche der beiden Scanlinien zeitlich später abzutasten ist,

wobei für die zeitlich zuerst abzutastende Scanlinie eine erste verringerte Energiedichte E1 spezifiziert wird und für die zeitlich später abzutastende Scanlinie eine zweite verringerte Energiedichte E2 spezifiziert wird,

wobei die erste und zweite verringerte Energiedichte E1 und E2 so spezifiziert werden, dass für den Fall, dass eine Abtastzeit $t_{A2}$ für die zeitlich später abzutastende Scanlinie geringer ist als eine Abtastzeit $t_{A1}$ für die zeitlich zuerst abzutastende Scanlinie, der Betrag der Differenz zwischen der ersten und zweiten verringerte Energiedichte |E1-E2| geringer ist als in dem Fall, in dem eine Abtastzeit $t_{A2}$ für die zeitlich später abzutastende Scanlinie größer ist als eine Abtastzeit $t_{A1}$ für die zeitlich zuerst abzutastende Scanlinie.

Die Erfinder haben festgestellt, dass eine noch homogenere Verfestigung des Aufbaumaterials erzielt werden kann, wenn berücksichtigt wird, ob sich die für die Abtastung der Scanlinien benötigte Zeitdauer vergrößert oder verkleinert. Wenn sich die Abtastdauer für die nachfolgende Scanlinie um einen bestimmten Betrag gegenüber der vorangegangenen benachbarten Scanlinie vergrößert, so wird die Energiedichte des Energiestrahlbündels in stärkerem Maße erhöht als bei einer Absenkung der Energiedichte in einem Fall, in dem die für die nachfolgende Scanlinie benötigte Zeitdauer um den gleichen Betrag gegenüber der benachbarten Scanlinie abgenommen hat. Die Erfinder erklären sich die resultierende positive Auswirkung auf die Homogenität dadurch, dass beim Verringern der Abtastzeitdauer die bereits im verfestigten Bereich gespeicherte Energie ausgenutzt werden kann, wohingegen bei einer Vergrö-ßerung der Abtastzeitdauer mehr Material auf eine höhere Temperatur gebracht werden muss. Es sei bemerkt, dass oftmals, insbesondere bei gleich bleibender Abtastgeschwindigkeit, eine vergrößerte Abtastdauer gleichbedeutend mit einer Vergrößerung der Scanlinienlänge ist.

Die Erfindung lässt sich insbesondere vorteilhaft anwenden, wenn örtlich benachbarte Scanlinien auch zeitlich nacheinander abgetastet werden, unabhängig von der Anzahl der verwendeten Energiestrahlbündel.

Weiter bevorzugt weist der bereitgestellte Datensatz eine Mehrzahl von Teilbereichen eines Querschnitts in einer Schicht auf, die oberhalb von unverfestigtem Material in der vorangegangenen Schicht liegen oder unterhalb von nicht zu verfestigendem Material in der nachfolgenden Schicht.

Die Erfinder haben die Erfahrung gemacht, dass in einem zu verfestigenden Objektquerschnitt gerade in Bodenflächenbereichen, also Bereichen, die während der Objektherstellung oberhalb von Aufbaumaterial liegen, das unverfestigt bleibt, und Deckflächenbereichen, also Bereichen eines Objektquerschnitts, welche unmittelbar nach der Objektherstellung von unverfestigt gebliebenem Aufbaumaterial bedeckt sind, eine Einstellung des Energieeintrags zur Erzielung einer guten Oberflächenqualität schwierig ist. Der Grund liegt in der unterschiedlichen Wärmeleitfähigkeit des unverfestigten Aufbaumaterials in der darunterliegenden Schicht bzw. darüberliegenden Schicht. Die Richtungsangaben "unterhalb" oder "oberhalb" beziehen sich dabei auf eine Richtung senkrecht zu den Schichtebenen. Es wird in diesem Zusammenhang angenommen, dass untenliegende Schichten zeitlich vor den darüberliegenden Schichten aufgetragen wurden und daher unterhalb der darüberliegenden Schichten angeordnet sind.

Durch die Anwendung der Erfindung gerade in Bodenflächenbereichen und Deckflächenbereichen wird es möglich, speziell in diesen heiklen Bereichen für eine gute Qualität zu sorgen. Bei einer weiteren bevorzugten Durchführungsweise des erfindungsgemäßen Verfahrens wird für den Fall, dass für eine Scanlinie eine Unterschreitung der Mindestzeitdauer festgestellt wird, eine Wartezeit vor oder nach der Abtastung des Aufbaumaterials entlang dieser Scanlinie eingelegt, wobei die Wartezeit höchstens, bevorzugt genau, der Differenz zwischen der Mindestzeitdauer und der Zeitdauer für die Abtastung dieser Scanlinie entspricht.

Durch die Anpassung der jeweiligen Wartezeit an die Abtastzeit für die Scanlinien lässt sich für Bereiche eines Objektquerschnitts, in denen wegen ihrer geringen Ausdehnung die Scanlinien-Abtastdauer kleiner als eine Mindestzeitdauer ist, dennoch eine sehr homogene Verfestigung des Aufbaumaterials erzielen.

Bei der Durchführungsweise des erfindungsgemäßen Verfahrens werden dem zumindest einen Teilbereich n Belichtungsbereiche zugeordnet, wobei n eine natürliche Zahl ist,

wobei es sich bei einem Belichtungsbereich um ein den Teilbereich partiell überdeckendes rechteckiges oder quadratisches Flächenelement handelt, wobei in einem Belichtungsbereich bei der Abtastung des Aufbaumaterials mit Energiestrahlung ein Energiestrahlbündel in, bevorzugt parallelen, Scanlinien über das Aufbaumaterial in dem Teilbereich bewegt wird.

Durch die Aufteilung eines Teilbereichs eines Objektquerschnitts bzw. des gesamten Objektquerschnitts mit Ausnahme der Konturlinie in Belichtungsbereiche kann für eine homogenere Verfestigung gesorgt werden, da, insbesondere bei großflächigen Objektquerschnitten, durch die Verfestigung des Aufbaumaterials Belichtungsbereich für Belichtungsbereich eine zu starke Auskühlung des Aufbaumaterials in der Nachbarschaft einer bereits verfestigten Stelle vermieden werden kann. Bevorzugt handelt es sich bei den Belichtungsbereichen um rechteckige oder quadratische Flächenelemente, welche besonders bevorzugt von gleicher Größe sind, so dass eine parkettartige Überdeckung eines (Teilbereichs) eines Objektquerschnitts auf einfache Weise möglich ist. Mit dem Begriff "partiell überdecken" ist dabei gemeint, dass ein Belichtungsbereich den Teilbereich des Objektquerschnitts (bzw. den gesamten Objektquerschnitt) nicht vollständig überdeckt. Innerhalb eines Belichtungsbereichs verlaufen bevorzugterweise die Scanlinien im Wesentlichen parallel zueinander, auch wenn dies nicht zwingend so sein muss.

Durch die Zuordnung von Belichtungsbereichen kann innerhalb eines Belichtungsbereichs das Aufbaumaterial mit Scanlinien gleicher Länge abgetastet werden, indem zum Beispiel die Scanlinien alle parallel zu einer Seite eines rechteckigen Belichtungsbereichs ausgerichtet sind. Für den Fall, dass die Ausdehnung eines Objektabschnitts kleiner als die resultierende konstante Scanlinienlänge ist, ist natürlich dieser Abschnitt mit kürzeren Scanlinien zur Verfestigung des Aufbaumaterials in diesem Abschnitt abzutasten. Durch das erfindungsgemäße Vorgehen wird dennoch für einen homogenen Energieeintrag in diesem Abschnitt gesorgt, indem beispielsweise die Mindestzeitdauer für die Abtastung einer Scanlinie gleich der Zeitdauer für die Abtastung entlang einer Scanlinie in dem Belichtungsbereich gesetzt wird, die parallel zu einer Seite des Belichtungsbereichs verläuft und sich über die gesamte Länge dieser Seite erstreckt.

Bei einer Abwandlung der soeben beschriebenen weiteren bevorzugten Durchführungsweise des erfindungsgemäßen Verfahrens wird für den Fall, dass für eine Scanlinie eine Unterschreitung der Mindestzeitdauer festgestellt wird, eine Wartezeit vor oder nach der Abtastung des Aufbaumaterials entlang dieser Scanlinie spezifiziert und während der Wartezeit eine Abtastung des Aufbaumaterials durch das Energiestrahlbündel entlang mindestens einer weiteren Scanlinie spezifiziert.

Selbst wenn eine Wartezeit vor oder nach der Abtastung des Aufbaumaterials entlang einer Scanlinie eingefügt wird, kann diese Wartezeit dafür ausgenutzt werden, Aufbaumaterial an einer anderen zu verfestigenden Stelle abzutasten, indem zum Beispiel während der Wartezeit das Aufbaumaterial entlang einer anderen Scanlinie, insbesondere in einem anderen Teilbereich eines Objektquerschnitts, abgetastet wird. Damit kann trotz des Einfügens von Wartezeiten die benötigte Zeitdauer für die Herstellung eines Objektes kurz gehalten werden.

Bei der erfindungsgemäßen Durchführungsweise wird die Mindestzeitdauer gleich dem Quotienten aus der Ausdehnung w des Belichtungsbereichs in der Richtung parallel zu den Scanlinien und der mittleren Bewegungsgeschwindigkeit v des Energiestrahlbündels entlang einer Scanlinie im Belichtungsbereich gesetzt, so dass eine Unterschreitung der Mindestzeitdauer daran erkennbar ist, dass die Länge einer Scanlinie h kleiner als die Ausdehnung w des Belichtungsbereichs in der Richtung parallel zu den Scanlinien ist.

Dadurch lässt sich auf einfache Weise die Mindestzeitdauer vorgeben, da die mittlere Bewegungsgeschwindigkeit eines Energiestrahlbündels entlang einer Scanlinie im Belichtungsbereich bestimmt werden kann und insbesondere bei einer konstanten Bewegungsgeschwindigkeit somit die Mindestzeitdauer auf einfache Weise aus der geometrischen Abmessung des Belichtungsbereichs parallel zu den Scanlinien resultiert.

Insbesondere kann die verringerte Energiedichte des Energiestrahlbündels ($E_{reduc}$) entlang einer Scanlinie gemäß der Gleichung

$$E_{reduc} = E_0 - (1-f(h)*h/w)*a*E_0$$

festgelegt werden,

wobei $E_0$ die mittlere Energiedichte des Energiestrahlbündels an Stellen des Teilbereichs ist, an denen beim Abtasten entlang von Scanlinien die Mindestzeitdauer nicht unterschritten wird,
wobei h die Länge einer Scanlinie in einem Teilbereich ist,
wobei f(h) eine Funktion ist, die die monotone Abnahme der Energiedichte mit abnehmender Länge einer Scanlinie beschreibt,
wobei w die Abmessung des Belichtungsbereichs in Richtung der Scanlinien ist und
wobei a den Betrag beschreibt, um den die Energiedichte des Energiestrahlbündels maximal verringert werden soll.

Mit der angegebenen Gleichung kann auf einfache Weise bereits vor dem Herstellungsvorgang eines Objekts mittels einer generativen Schichtbauvorrichtung die bevorzugte einzutragende Energie an einer Stelle des Aufbaumaterials beim Abtasten entlang von Scanlinien errechnet werden. Es sei hierbei noch erwähnt, dass mit "monotone Abnahme" gemeint ist, dass die Energiedichte auf jeden Fall mit abnehmender Länge einer Scanlinie nicht konstant bleibt. Die Funktion f(h) und der Parameter a können im Vorhinein durch Vorversuche ermittelt werden. Insbesondere bei einem "Additive Manufacturing"-Verfahren lohnt sich der Aufwand für eine begrenzte Anzahl an Vorversuchen, da mittels des erfindungsgemäßen Vorgehens die Herstellzeit sich gerade bei der Herstellung von vielen Objekten in serienmäßiger Weise verringern lässt.

Ein erfindungsgemäßes generatives Schichtbauverfahren zur Herstellung mindestens eines dreidimensionalen Objekts, wobei in dem generativen Schichtbauverfahren das Objekt hergestellt wird durch Aufbringen eines Aufbaumaterials Schicht auf Schicht und Verfestigen des Aufbaumaterials mittels Zufuhr von Strahlungsenergie zu allen Stellen in einer Schicht, die dem Querschnitt des Objekts in dieser Schicht entsprechen, indem diese Stellen mittels einer Energieeintragseinrichtung dergestalt mit Energiestrahlung abgetastet werden, dass die Energieeintragseinrichtung mindestens ein Energiestrahlbündel so auf vorgegebene Stellen einer Schicht des Aufbaumaterials richtet, dass durch das Energiestrahlbündel eine Verfestigung des Aufbaumaterials bewirkt wird, beinhaltet ein erfindungsgemäßes Verfahren zur Bereitstellung von Steuerdaten.

Mittels des erfindungsgemäßen generativen Schichtbauverfahrens lassen sich homogen verfestigte Objekte innerhalb einer kurzen Herstellungszeit realisieren.

Eine erfindungsgemäße Vorrichtung zur computergestützten Bereitstellung von Steuerdaten für eine generative Schichtbauvorrichtung zur Herstellung eines dreidimensionalen Objekts, wobei das Objekt mittels der generativen Schichtbauvorrichtung hergestellt wird durch Aufbringen eines Aufbaumaterials Schicht auf Schicht und Verfestigen des Aufbaumaterials mittels Zufuhr von Strahlungsenergie zu allen Stellen in einer Schicht, die dem Querschnitt des Objekts in dieser Schicht entsprechen, indem diese Stellen mittels einer Energieeintragseinrichtung dergestalt mit Energiestrahlung abgetastet werden, dass die Energieeintragseinrichtung mindestens ein Energiestrahlbündel so auf vorgegebene Stellen einer Schicht des Aufbaumaterials richtet, dass durch das Energiestrahlbündel eine Verfestigung des Aufbaumaterials bewirkt wird, weist eine Bereitstellungseinrichtung auf, die auf einen Datensatz zugreift, welcher ein Datenmodell einer Anzahl von während der Herstellung selektiv zu verfestigenden Aufbaumaterialschichten aufweist, wobei in jeder der Schichten des Datenmodells einem Objektquerschnitt entsprechende Stellen gekennzeichnet sind, an denen eine Verfestigung des Aufbaumaterials stattfinden soll (soweit in dieser Schicht vorgesehen bzw. vorhanden),

wobei in dem Datensatz in zumindest einer, bevorzugt allen, der Schichten des Datenmodells zumindest für einen Teilbereich eines Objektquerschnitts spezifiziert ist, in welcher zeitlichen Reihenfolge ein Energiestrahlbündel in, bevorzugt parallelen, Scanlinien über die Stellen dieses Teilbereichs zur Abtastung des Aufbaumaterials zu bewegen ist.

Die Vorrichtung ist unter anderem gekennzeichnet durch eine Datensatz-Abänderungseinheit, die so eingerichtet ist, dass sie den Datensatz so abändert, dass in zumindest einer, bevorzugt allen, der Schichten des Datenmodells für den Teilbereich eines Objektquerschnitts abgeprüft wird, ob die für die Abtastung des Aufbaumaterials entlang einer Scanlinie benötigte Abtastzeit eine vorgegebene Mindestzeitdauer unterschreitet und falls dies für eine Scanlinie festgestellt wird, eine verringerte Energiedichte des Energiestrahlbündels während der Abtastung des Aufbaumaterials entlang dieser Scanlinie spezifiziert wird und/oder nach dem Abtasten entlang der Scanlinie eine Wartezeit spezifiziert wird, bevor das Energiestrahlbündel entlang einer weiteren Scanlinie bewegt wird, und

eine Steuerdatensatz-Bereitstellungseinheit, die eingerichtet ist, den von der Datensatz-Abänderungseinheit abgeänderten Datensatz für die Generierung eines Steuerdatensatzes für die generative Schichtbauvorrichtung bereit zu stellen.

Die Bereitstellung des im zweiten Schritt abgeänderten Datensatzes für die Generierung eines Steuerdatensatzes kann auch so aussehen, dass die Steuerdatensatz-Bereitstellungseinheit selbst den abgeänderten Datensatz in einen Steuerdatensatz für die generative Schichtbauvorrichtung integriert. Bereitstellen umfasst aber auch ein Weiterleiten des Datensatzes an eine Datenverarbeitungsvorrichtung, welche den Datensatz in einen Steuersatz integriert, oder ein direktes Weiterleiten an eine generative Schichtbauvorrichtung. Insbesondere ist es möglich, während eines Herstellvorgangs in der generativen Schichtbauvorrichtung dieser dynamisch Datensätze für noch herzustellende Objektquerschnitte zur Verfügung zu stellen.

Bevorzugt kann die erfindungsgemäße generative Schichtbauvorrichtung eine Mindestzeitdauer-Entgegennahmeeinheit aufweisen, die eingerichtet ist, die Mindestzeitdauer aus einem Speicher, über ein Netzwerk oder eine Nutzereingabe entgegenzunehmen. Durch das Vorhandensein der Mindestzeitdauer-Entgegennahmeeinheit ist es in einfacher Weise möglich, die Mindestzeitdauer für die Abtastung einer Scanlinie vorzugeben bzw. abzuändern.

Eine erfindungsgemäße generative Schichtbauvorrichtung zur Herstellung eines dreidimensionalen Objekts, wobei in der generativen Schichtbauvorrichtung das Objekt hergestellt wird durch Aufbringen eines Aufbaumaterials Schicht auf Schicht und Verfestigen des Aufbaumaterials mittels Zufuhr von Strahlungsenergie zu allen Stellen in einer Schicht, die dem Querschnitt des Objekts in dieser Schicht entsprechen, indem diese Stellen mittels einer Energieeintragseinrichtung dergestalt mit Energiestrahlung abgetastet werden, dass die Energieeintragseinrichtung mindestens ein Energiestrahlbündel so auf vorgegebene Stellen einer Schicht des Aufbaumaterials richtet, dass durch das Energiestrahlbündel eine Verfestigung des Aufbaumaterials bewirkt wird, weist eine erfindungsgemäße Vorrichtung zur computergestützten Bereitstellung von Steuerdaten auf.

Ein erfindungsgemäßes Computerprogramm weist Programmcodemittel auf, um alle Schritte eines erfindungsgemäßen Verfahrens zur computergestützten Bereitstellung von Steuerdaten auszuführen, wenn das Computerprogramm mittels eines Datenprozessors, insbesondere eines mit einer generativen Schichtbauvorrichtung zusammenwirkenden Datenprozessors, ausgeführt wird.

"Zusammenwirl<en" heißt hierbei, dass der Datenprozessor entweder in die generative Schichtbauvorrichtung integriert ist oder mit ihr Daten austauschen kann. Die Implementierung des erfindungsgemäßen Verfahrens zur Bereitstellung von Steuerdaten sowie der zugehörigen Vorrichtung mittels Software ermöglicht eine einfache Installierbarkeit auf verschiedenen EDV-Systemen an verschiedenen Orten (beispielsweise beim Ersteller des Designs des Objekts oder aber beim Betreiber der generativen Schichtbauvorrichtung).

Auf einem erfindungsgemäßes computerlesbaren Speichermedium ist das erfindungsgemäße Computerprogramm gespeichert. Das Speichermedium kann insbesondere auch ein in einer generativen Schichtbauvorrichtung oder der Energieeintragseinrichtung vorhandener Speicher sein.

Weitere Merkmale und Zweckmäßigkeiten der Erfindung ergeben sich aus der Beschreibung von Ausführungsbeispielen anhand der beigefügten Zeichnungen.

Fig. 1  zeigt eine schematische, teilweise im Schnitt dargestellte Ansicht einer beispielhaften Vorrichtung zum generativen Herstellen eines dreidimensionalen Objekts gemäß einer Ausführungsform der Erfindung,

Fig. 2    zeigt schematisch den Zusammenhang zwischen der zu spezifizierenden Energiedichte E eines Energiestrahlbündels und der Abtastzeit $t_A$ für eine Scanlinie für den Fall, dass dieser linear ist,

Fig. 3    zeigt ein schematisches Diagramm zur Veranschaulichung einer besonderen Ausführungsweise der Erfindung,

Fig. 4    zeigt eine schematische Draufsicht auf einen beispielhaften Objektquerschnitt zur Veranschaulichung einer besonderen Ausführungsweise der Erfindung,

Fig. 5    veranschaulicht den Ablauf eines erfindungsgemäßen Verfahrens zur Bereitstellung von Steuerdaten, und

Fig. 6    zeigt den schematischen Aufbau einer erfindungsgemäßen Vorrichtung zur Bereitstellung von Steuerdaten.

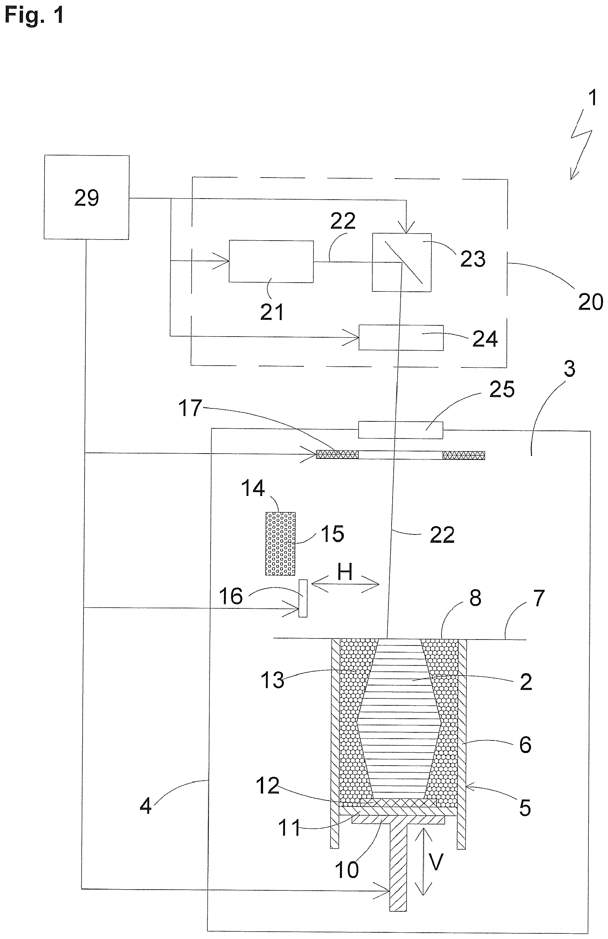

Für eine Beschreibung der Erfindung soll zunächst nachfolgend am Beispiel einer Lasersinter- oder -schmelzvorrichtung eine erfindungsgemäße generative Schichtbauvorrichtung unter Bezugnahme auf Fig. 1 beschrieben werden.

Zum Aufbauen eines Objekts 2 enthält die Lasersinter- oder Laserschmelzvorrichtung 1 eine Prozesskammer oder Baukammer 3 mit einer Kammerwandung 4. In der Prozesskammer 3 ist ein nach oben offener Baubehälter 5 mit einer Behälterwandung 6 angeordnet. Durch die obere Öffnung des Baubehälters 5 ist eine Arbeitsebene 7 definiert, wobei der innerhalb der Öffnung liegende Bereich der Arbeitsebene 7, der zum Aufbau des Objekts 2 verwendet werden kann, als Baufeld 8 bezeichnet wird.

In dem Baubehälter 5 ist ein in einer vertikalen Richtung V bewegbarer Träger 10 angeordnet, an dem eine Grundplatte 11 angebracht ist, die den Behälter 5 nach unten abschließt und damit dessen Boden bildet. Die Grundplatte 11 kann eine getrennt von dem Träger 10 gebildete Platte sein, die an dem Träger 10 befestigt ist, oder sie kann integral mit dem Träger 10 ausgebildet sein. Je nach verwendetem Pulver und Prozess kann auf der Grundplatte 11 noch eine Bauplattform 12 als Bauunterlage angebracht sein, auf der das Objekt 2 aufgebaut wird. Das Objekt 2 kann aber auch auf der Grundplatte 11 selber aufgebaut werden, die dann als Bauunterlage dient. In Fig. 1 ist das in dem Behälter 5 auf der Bauplattform 12 zu bildende Objekt 2 unterhalb der Arbeitsebene 7 in einem Zwischenzustand dargestellt mit mehreren verfestigten Schichten, umgeben von unverfestigt gebliebenem Aufbaumaterial 13.

Die Lasersinter- oder -schmelzvorrichtung 1 enthält weiterhin einen Vorratsbehälter 14 für ein Aufbaumaterial 15, in diesem Beispiel ein durch elektromagnetische Strahlung verfestigbares Pulver, und einen in einer horizontalen Richtung H bewegbaren Beschichter 16 zum Aufbringen des Aufbaumaterials 15 innerhalb des Baufelds 8. Optional kann in der Prozesskammer 3 eine Heizvorrichtung, z.B. eine Strahlungsheizung 17 angeordnet sein, die zum Beheizen des aufgebrachten Aufbaumaterials dient. Als Strahlungsheizung 17 kann beispielsweise ein Infrarotstrahler vorgesehen sein.

Die beispielhafte generative Schichtbauvorrichtung 1 enthält ferner eine Belichtungsvorrichtung 20 mit einem Laser 21, der einen Laserstrahl 22 erzeugt, der über eine Umlenkvorrichtung 23 umgelenkt wird und durch eine Fokussiervorrichtung 24 über ein Einkoppelfenster 25, das an der Oberseite der Prozesskammer 3 in der Kammerwandung 4 angebracht ist, auf die Arbeitsebene 7 fokussiert wird.

Weiter enthält die Lasersintervorrichtung 1 eine Steuereinrichtung 29, über die die einzelnen Bestandteile der Vorrichtung 1 in koordinierter Weise zum Durchführen des Bauprozesses gesteuert werden. Alternativ kann die Steuereinrichtung auch teilweise oder ganz außerhalb der Vorrichtung angebracht sein. Die Steuereinrichtung kann eine CPU enthalten, deren Betrieb durch ein Computerprogramm (Software) gesteuert wird. Das Computerprogramm kann getrennt von der Vorrichtung auf einem Speichermedium gespeichert sein, von dem aus es (z.B. über ein Netzwerk) in die Vorrichtung, insbesondere in die Steuereinrichtung geladen werden kann.

Im Betrieb wird durch die Steuereinrichtung 29 der Träger 10 Schicht für Schicht abgesenkt, der Beschichter 16 zum Auftrag einer neuen Pulverschicht angesteuert und die Umlenkvorrichtung 23 und gegebenenfalls auch der Laser 21 und/oder die Fokussiervorrichtung 24 angesteuert zum Verfestigen der jeweiligen Schicht an den dem jeweiligen Objekt entsprechenden Stellen mittels des Lasers durch Abtasten dieser Stellen mit dem Laser.

Beim Lasersintern oder Laserschmelzen kann eine Belichtungsvorrichtung beispielsweise einen oder mehrere Gas- oder Festkörperlaser oder jede andere Art von Laser wie z.B. Laserdioden, insbesondere VCSEL (Vertical Cavity Surface Emitting Laser) oder VECSEL (Vertical External Cavity Surface Emitting Laser), oder eine Zeile dieser Laser umfassen. Der in Fig. 1 gezeigte spezifische Aufbau einer Lasersinter- oder -schmelzvorrichtung ist daher für die vorliegende Erfindung nur beispielhaft und kann natürlich auch abgewandelt werden, insbesondere bei Verwendung einer anderen Belichtungsvorrichtung als der gezeigten. Um kenntlich zu machen, dass die Gestalt der Strahlungsauftrefffläche auf dem Aufbaumaterial nicht notwendigerweise annähernd punktförmig, sondern auch flächig sein kann, wird im folgenden auch oftmals der Begriff "Strahlbündel" synonym zu "Strahl" verwendet.

Alle im weiteren Verlauf gemachten Ausführungen gelten nicht nur für Lasersinter- oder -schmelzvorrichtungen, sondern auch für anders geartete generative Schichtbauvorrichtungen, bei denen Wärmeenergie in Form von Strahlung in das Aufbaumaterial eingetragen wird.

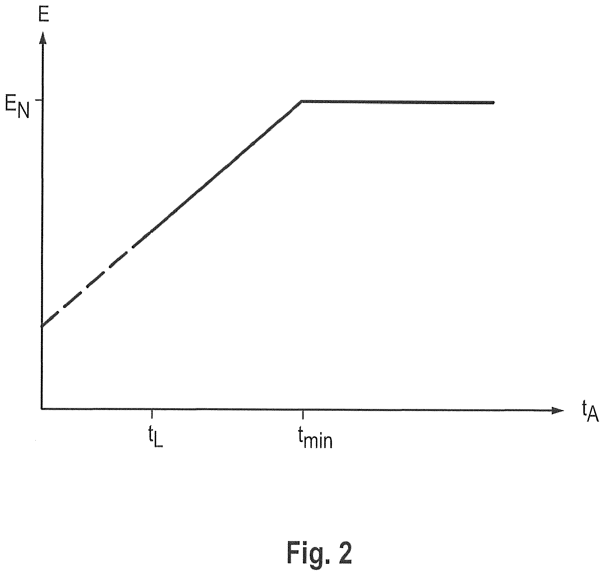

In der soeben beispielhaft beschriebenen generativen Schichtbauvorrichtung geht ein Herstellvorgang so vonstatten, dass die Steuereinheit 29 einen Steuerdatensatz (oft auch als Steuerbefehlssatz bezeichnet) abarbeitet. Das erfindungsgemäße Vorgehen wird nachfolgend beispielhaft unter Bezugnahme auf die Figuren 2 bis 6 beschrieben.

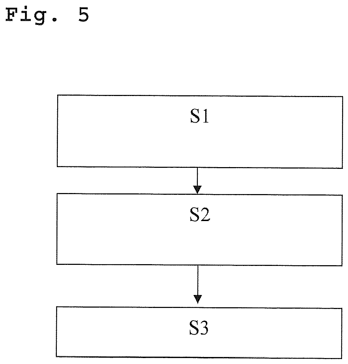

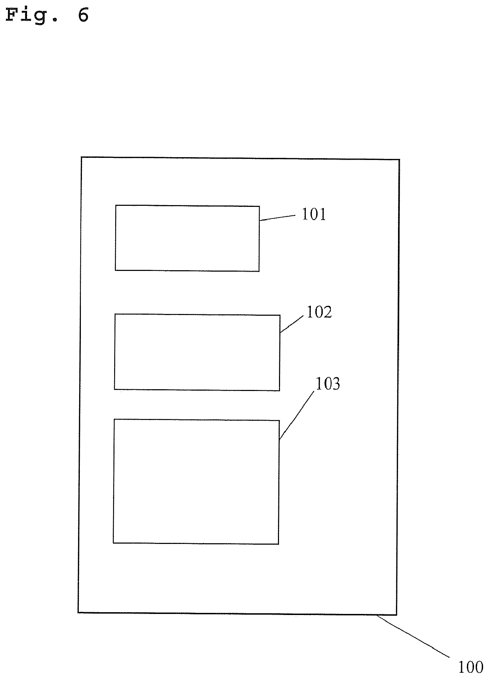

Wie in Fig. 6 gezeigt, enthält eine erfindungsgemäße Vorrichtung 100 zur Bereitstellung von Steuerdaten für eine generative Schichtbauvorrichtung eine Bereitstellungseinrichtung 101, eine Datensatz-Abänderungseinheit 102 und eine Steuerdatensatz-Bereitstellungseinheit 103. Die Funktionsweise der Vorrichtung 100 zur Bereitstellung von Steuerdaten wird unter Bezugnahme auf Fig. 5 beschrieben. Die Fig. 2 bis 4 dienen dabei der weiteren Veranschaulichung.

In der in Fig. 6 gezeigten Vorrichtung 100 zur Bereitstellung von Steuerdaten für eine generativen Schichtbauvorrichtung greift zunächst die Bereitstellungseinrichtung 101 auf einen Datensatz zu, welcher ein Datenmodell einer Anzahl von während der Herstellung selektiv zu verfestigenden Aufbaumaterialschichten aufweist. In dem in Fig. 5 gezeigten Verfahrensablauf ist dies der Schritt S1.

Falls ein Datensatz, auf den die Bereitstellungseinrichtung 101 zugreift, keine Information über die zeitliche Reihenfolge enthält, in der ein Energiestrahlbündel in bevorzugt parallelen Scanlinien über die zu verfestigenden Stellen zumindest eines Teilbereichs eines Objektquerschnitts zu bewegen ist, so kann diese Information vor Durchführung des erfindungsgemäßen Verfahrens dem Datensatz hinzugefügt werden, beispielsweise durch die erfindungsgemäße Vorrichtung 100 selbst.

In einem in Fig. 5 gezeigten Schritt S2 wird durch die Datensatz-Abänderungseinheit 102 zunächst abgeprüft, ob in zumindest einem Teilbereich eines Objektquerschnitts die vorgegebene Mindestzeitdauer für die Abtastung einer Scanlinie unterschritten wird. Falls solch eine Unterschreitung festgestellt wird, so verringert die Datensatz-Abänderungseinheit 102 entweder die spezifizierte Energiedichte des Energiestrahlbündels für die Abtastung der entsprechenden Scanlinie oder aber es wird eine Wartezeit vor oder nach der Abtastung der entsprechenden Scanlinie spezifiziert, so dass die Abtastzeit für die entsprechende Scanlinie und die Wartezeit zusammen bevorzugt der Mindestzeitdauer entsprechen. Natürlich können auch sowohl die Energiedichte des Energiestrahlbündels verringert werden als auch eine Wartezeit eingefügt werden.

Fig. 2 zeigt auf schematisch den Zusammenhang zwischen der zu spezifizierenden Energiedichte E eines Energiestrahlbündels und der Abtastzeit $t_A$ für eine Scanlinie. Man erkennt, dass die Energiedichte noch relativ niedriger ist, solange die Abtastzeit $t_A$ unterhalb einer vorgegebenen Mindestzeitdauer $t_{min}$ liegt. Sobald die Abtastzeit $t_A$ größer oder gleich der vorgegebenen Mindestzeitdauer $t_{min}$ ist, zeigt demgegenüber Fig. 2 für das Energiestrahlbündel eine konstante Norm-Energiedichte $E_N$.

Es sei betont, dass der in Fig. 2 gezeigte lineare Zusammenhang zwischen der Energiedichte E des Energiestrahlbündels und der Abtastzeit $t_A$, falls diese unterhalb der Mindestzeitdauer $t_{min}$ liegt, auch ein nichtlinearer Zusammenhang sein kann, sofern die Energiedichte E monoton mit der Abtastzeit $t_A$ abnimmt und kleiner als die Norm-Energiedichte $E_N$ ist. Ebenfalls muss die Energiedichte für Werte der Abtastzeit $t_A$, die größer als die Mindestzeitdauer $t_{min}$ sind, nicht notwendigerweise den Wert der Norm-Energiedichte $E_N$ annehmen, sondern kann beliebige andere Werte oberhalb des Wertes der Norm-Energiedichte $E_N$ annehmen.

Auch wenn die schematische Darstellung in Fig. 2 scheinbar beliebig kurze Abtastzeiten für eine Scanlinie zulässt, so wird es in der Praxis oft eine Minimal-Abtastzeit $t_L$ geben, unterhalb derer keine Scanlinie spezifiziert wird, da durch die apparativen Randbedingungen eine gewisse Minimal-Abtastzeit nicht unterschritten werden kann. Der linke Bereich der Kurve ist daher gestrichelt dargestellt. Die minimale Abtastzeit $t_L$ hängt beispielsweise von der Maximalgeschwindigkeit der Umlenkvorrichtung 23 ab.

Die Energiedichte des Energiestrahlbündels kann beispielsweise durch Verringern der Leistung der Laserquelle oder Elektronenstrahlquelle bewerkstelligt werden, oder aber durch eine andere Ansteuerung der Strahlungsenergiequelle, beispielsweise eine Änderung der Laserpulsbreite bei einem gepulsten Laser.

In einem in Fig. 5 gezeigten Schritt S3 wird schließlich durch die Datensatz-Bereitstellungseinheit 103 der im Schritt S2 abgeänderte Datensatz für die Generierung eines Steuerdatensatzes bereitgestellt.

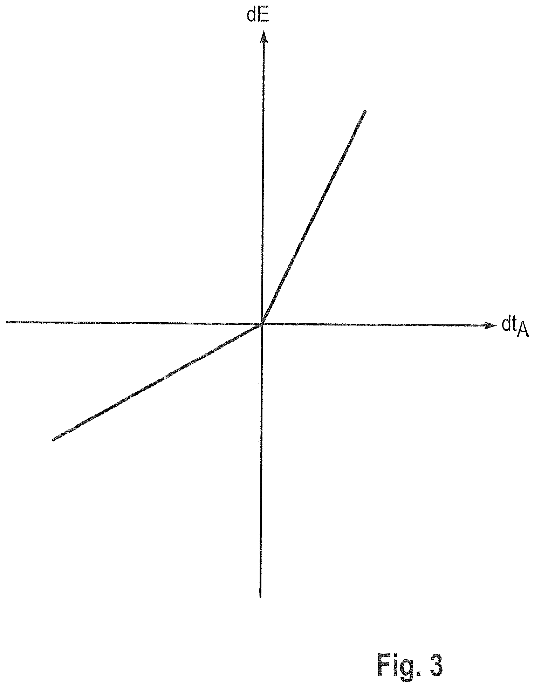

Nachfolgend werden weitere Merkmale und Abwandlungen des soeben beschriebenen Vorgehens beschrieben. Bei einer bevorzugten Abwandlung der Erfindung wird unterschieden, ob die zeitlich nachfolgende Scanlinie eine geringere oder größere Abtastzeit als die vorangehende Scanlinie aufweist. Hierfür ermittelt die Datensatz-Abänderungseinheit 102, bei zwei benachbarten Scanlinien, deren Abtastzeiten jeweils die vorgegebene Mindestzeitdauer unterschreiten, welche der beiden Scanlinien in dem Datensatz zeitlich später abgetastet werden soll. Der Grund hierfür ist, dass die Erfinder festgestellt haben, dass bei einer längeren Abtastzeit für die zeitlich spätere Scanlinie die Abänderung der Energiedichte gegenüber der zeitlich vorangegangenen Scanlinie größer sein sollte als in dem Fall, in dem die zeitlich nachfolgende Scanlinie eine geringere Abtastzeit hat. Das Vorgehen ist schematisch in Fig. 3 gezeigt.

In dem Diagramm von Fig. 3 ist auf der Abszisse die Veränderung dt$_A$ der Abtastzeit beim Übergang zur zeitlich nachfolgenden Scanlinie dargestellt, wobei dt$_A$ = t$_A$ (nachfolgende Scanlinie) - t$_A$ (vorangehende Scanlinie) gilt. Die Ordinate zeigt die Änderung dE der Energiedichte beim Übergang zur zeitlich nachfolgenden Scanlinie, wobei dE = E (nachfolgende Scanlinie) - E (vorangehende Scanlinie) gilt. Man erkennt, dass der beispielhaft gezeigte lineare Zusammenhang zwischen dE und dt$_A$ für zunehmende Abtastzeiten (rechts der vertikalen Achse des Koordinatensystems) ein anderer ist als der lineare Zusammenhang für abnehmende Abtastzeiten (links der vertikalen Achse des Koordinatensystems). Anhand der unterschiedlichen Steigungen im ersten und dritten Quadranten des kartesischen Koordinatensystems ist ersichtlich, dass für zunehmende Abtastzeiten die Energiedichte in stärkerem Maße verändert wird als für abnehmende Abtastzeiten. Wiederum ist der lineare Zusammenhang lediglich beispielhaft.

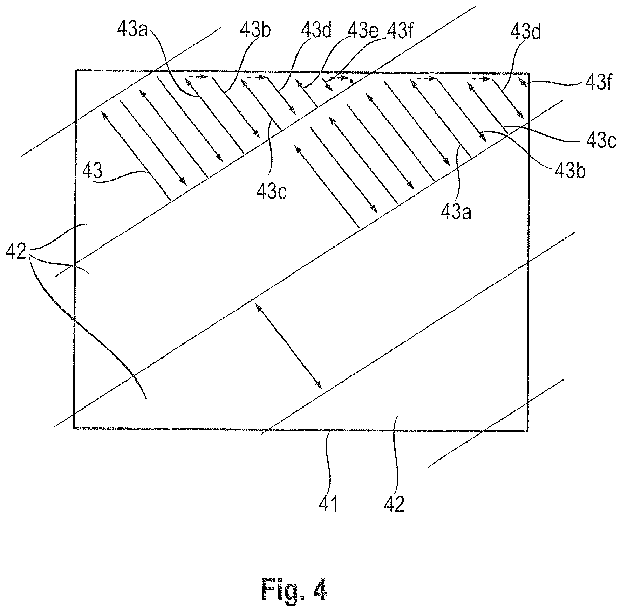

Fig. 4 veranschaulicht ein Merkmal, bei dem zumindest einem Teilbereich eines zu verfestigenden Objektquerschnitts mehrere Belichtungsbereiche zugeordnet werden. Fig. 4 zeigt schematisch einen beispielhaft rechteckigen Objektquerschnitt 41. Dieser wird nicht durch Abfahren mittels Scanlinien, die sich über die gesamte Breite des Objektquerschnitts erstrecken, verfestigt, sondern dem Objektquerschnitt 41 sind streifenförmige (rechteckige) Belichtungsbereiche 42 zugeordnet. In jedem der Belichtungsbereiche 42 wird das zu verfestigende Aufbaumaterial innerhalb des Objektquerschnitts 41 durch Abfahren von benachbarten Scanlinien 43 abgetastet, wobei zwei benachbarte Scanlinien hier beispielsweise jeweils in entgegengesetzten Richtungen abgefahren werden. Im vorliegenden Beispiel ist als Mindestzeitdauer für die Abtastung einer Scanlinie jene Zeitdauer angegeben, die für die Abtastung entlang der Scanlinien 43 benötigt wird, die vollständig innerhalb des Objektquerschnitts liegen. Man erkennt jedoch anhand der Scanlinien 43a, 43b, 43c, 43d, 43e und 43f, dass die Scanlinienlänge und (bei im Beispiel konstanter Abtastgeschwindigkeit bzw. Bewegungsgeschwindigkeit v eines Strahlbündels entlang der Scanlinien) auch die Abtastzeit abnehmen, wenn der Belichtungsbereich sich über den Rand des Objektquerschnitts 41 hinaus erstreckt. Zur Anpassung der Energiedichte des Strahlbündels an die verringerten Abtastzeiten wird deshalb für die Scanlinien 43a bis 43f jeweils eine verringerte Energiedichte spezifiziert. Nimmt man an, dass die Scanlinien 43 alle mit der gleichen Norm-Energiedichte E$_N$ durchfahren werden, so wird beispielsweise für die Scanlinie 43a die Energiedichte 0,9 x E$_N$ spezifiziert, für die Scanlinie 43b die Energiedichte 0,85 $\times$ E$_N$, für die Scanlinie 43c die Energiedichte 0,8 $\times$ E$_N$, für die Scanlinie 43d die Energiedichte 0,75 $\times$ E$_N$, für die Scanlinie 43e die Energiedichte 0,7 $\times$ E$_N$ und für die Scanlinie 43f die Energiedichte 0,65 $\times$ E$_N$.

Man erkennt auch in Fig. 4, dass dort, wo sich die Abtastdauer (und in der Regel auch die Scanlinienlänge) stark ändern, sich auch die Energiedichte stark ändert. Insbesondere sieht man das in der rechten oberen Ecke des Objektquerschnitts 41, wo die Scanlinien 43d und 43f unmittelbar nebeneinander liegen und für die Scanlinie 43d eine Energiedichte von 0,75 $\times$ E$_N$ und für die Scanlinie 43f eine Energiedichte von 0,65 $\times$ E$_N$ spezifiziert sind.

Zur Vereinfachung der Festlegung der einzutragenden Energiedichte vor der Herstellung eines Objekts bietet es sich an, eine Gleichung für die einzutragende Energiedichte aufzustellen. Als Beispiel für solch eine Gleichung sei hier die Gleichung

$$E_{reduc} = E_0 - (1 - f(h)*h/w)*a*E_0$$

angegeben,

wobei E$_0$ die mittlere Energiedichte des Energiestrahlbündels an Stellen des Teilbereichs ist, an denen beim Abtasten entlang von Scanlinien die Mindestzeitdauer nicht unterschritten wird,
wobei h die Länge einer Scanlinie in einem Teilbereich ist,
wobei f(h) eine Funktion ist, die die monotone Abnahme der Energiedichte mit abnehmender Länge einer Scanlinie beschreibt,
wobei w die Abmessung des Belichtungsbereichs in Richtung der Scanlinien ist und
wobei a den Betrag beschreibt, um den die Energiedichte des Energiestrahlbündels maximal verringert werden soll. Die Funktion f(h) kann z.B. eine lineare Funktion sein.

Abschließend sei noch erwähnt, dass eine erfindungsgemäße Vorrichtung 100 zur Bereitstellung von Steuerdaten für eine generative Schichtbauvorrichtung nicht nur allein durch Softwarekomponenten, sondern auch allein durch Hardware-Komponenten oder Mischungen aus Hard- und Software realisiert sein kann. In der vorliegenden Anmeldung erwähnte Schnittstellen müssen insbesondere nicht zwangsläufig als Hardware-Komponenten ausgebildet sein, sondern können auch als Softwaremodule realisiert sein, beispielsweise, wenn die darüber eingespeisten bzw. ausgegebenen Daten von bereits auf dem gleichen Gerät realisierten anderen Komponenten übernommen werden können oder an eine andere Komponente nur softwaremäßig übergeben werden müssen. Ebenso könnten die Schnittstellen aus Hardware- und Software-Komponenten bestehen, wie zum Beispiel einer Standard-Hardware-Schnittstelle, die durch Software für den konkreten Einsatzzweck speziell konfiguriert wird. Außerdem können mehrere Schnittstellen auch in einer gemeinsamen Schnittstelle, beispielsweise einer Input-Output-Schnittstelle, zusammengefasst sein.

## Patentansprüche

1. Computergestütztes Verfahren zur Bereitstellung von Steuerdaten für eine generative Schichtbauvorrichtung zur Herstellung eines dreidimensionalen Objekts,

   wobei das Objekt mittels der generativen Schichtbauvorrichtung hergestellt wird durch Aufbringen eines Aufbaumaterials Schicht auf Schicht und Verfestigen des Aufbaumaterials mittels Zufuhr von Strahlungsenergie zu allen Stellen in einer Schicht, die dem Querschnitt des Objekts in dieser Schicht entsprechen, indem diese Stellen mittels einer Energieeintragseinrichtung dergestalt mit Energiestrahlung abgetastet werden, dass die Energieeintragseinrichtung mindestens ein Energiestrahlbündel so auf vorgegebene Stellen einer Schicht des Aufbaumaterials richtet, dass durch das Energiestrahlbündel eine Verfestigung des Aufbaumaterials bewirkt wird,

   wobei das Verfahren zur Generierung eines Steuerdatensatzes einen ersten Schritt (S1) des Zugriffs auf einen Datensatz aufweist, der ein Datenmodell einer Anzahl von während der Herstellung selektiv zu verfestigenden Aufbaumaterialschichten aufweist, wobei in jeder der Schichten des Datenmodells einem Objektquerschnitt entsprechende Stellen gekennzeichnet sind, an denen eine Verfestigung des Aufbaumaterials stattfinden soll,

   wobei in dem Datensatz in zumindest einer, bevorzugt allen, der Schichten des Datenmodells zumindest für einen Teilbereich eines Objektquerschnitts spezifiziert ist, in welcher zeitlichen Reihenfolge ein Energiestrahlbündel in, bevorzugt parallelen, Scanlinien über die Stellen dieses Teilbereichs zur Abtastung des Aufbaumaterials zu bewegen ist,

   wobei dem zumindest einen Teilbereich n Belichtungsbereiche zugeordnet werden, wobei n eine natürliche Zahl ist,

   wobei es sich bei einem Belichtungsbereich um ein den Teilbereich partiell überdeckendes rechteckiges oder quadratisches Flächenelement handelt,

   wobei in einem Belichtungsbereich bei der Abtastung des Aufbaumaterials mit Energiestrahlung ein Energiestrahlbündel in, bevorzugt parallelen, Scanlinien über das Aufbaumaterial in dem Teilbereich bewegt wird,

   **dadurch gekennzeichnet, dass** in einem zweiten Schritt (S2) der Datensatz so abgeändert wird, dass in zumindest einer, bevorzugt allen, der Schichten des Datenmodells für den jeweiligen Teilbereich eines Objektquerschnitts abgeprüft wird, ob die für die Abtastung des Aufbaumaterials entlang einer Scanlinie benötigte Abtastzeit eine vorgegebene Mindestzeitdauer $t_{min}$ unterschreitet und falls dies für eine Scanlinie festgestellt wird, entweder eine verringerte Energiedichte des Energiestrahlbündels während der Abtastung des Aufbaumaterials entlang dieser Scanlinie spezifiziert wird und/oder nach dem Abtasten entlang der Scanlinie eine Wartezeit spezifiziert wird, bevor das Energiestrahlbündel entlang einer weiteren Scanlinie bewegt wird,

   wobei die Mindestzeitdauer $t_{min}$ gleich dem Quotienten aus der Ausdehnung (w) des Belichtungsbereichs in der Richtung parallel zu den Scanlinien und der mittleren Bewegungsgeschwindigkeit (v) des Energiestrahlbündels entlang einer Scanlinie im Belichtungsbereich gesetzt wird, so dass eine Unterschreitung der Mindestzeitdauer $t_{min}$ daran erkennbar ist, dass die Länge einer Scanlinie (h) kleiner als die Ausdehnung (w) des Belichtungsbereichs in der Richtung parallel zu den Scanlinien ist,

   wobei die verringerte Energiedichte des Energiestrahlbündels so spezifiziert wird, dass eine umso geringere Energiedichte des Energiestrahlbündels spezifiziert wird, je stärker die vorgegebene Mindestzeitdauer $t_{min}$ unterschritten wird,

   und

   in einem dritten Schritt (S3) der im zweiten Schritt abgeänderte Datensatz für die Generierung eines Steuerdatensatz für die generative Schichtbauvorrichtung bereitgestellt wird.

2. Verfahren nach Anspruch 1, bei dem im zweiten Schritt (S2) abgeprüft wird, ob bei zwei nebeneinander liegenden Scanlinien die vorgegebene Mindestzeitdauer $t_{min}$ unterschiedlich stark unterschritten wird und falls dies der Fall ist, abgeprüft wird, welche der beiden Scanlinien zeitlich später abzutasten ist,

   wobei für die zeitlich zuerst abzutastende Scanlinie eine erste verringerte Energiedichte E1 spezifiziert wird und für die zeitlich später abzutastende Scanlinie eine zweite verringerte Energiedichte E2 spezifiziert wird,

   wobei die erste und zweite verringerte Energiedichte E1 und E2 so spezifiziert werden, dass für den Fall, dass eine Abtastzeit $t_{A2}$ für die zeitlich später abzutastende Scanlinie geringer ist als eine Abtastzeit $t_{A1}$ für die zeitlich zuerst abzutastende Scanlinie, der Betrag der Differenz zwischen der ersten und zweiten verringerte Energiedichte |E1-E2| geringer ist als in dem Fall, in dem eine Abtastzeit $t_{A2}$ für die zeitlich später abzutastende Scanlinie größer ist als eine Abtastzeit $t_{A1}$ für die zeitlich zuerst abzutastende Scanlinie.

**3.** Verfahren nach Anspruch 1 oder 2, bei dem der bereitgestellte Datensatz eine Mehrzahl von Teilbereichen eines Querschnitts in einer Schicht aufweist, die oberhalb von unverfestigtem Material in der vorangegangenen Schicht liegen oder unterhalb von nicht zu verfestigendem Material in der nachfolgenden Schicht.

**4.** Verfahren nach einem der vorangehenden Ansprüche, bei dem für den Fall, dass für eine Scanlinie eine Unterschreitung der Mindestzeitdauer $t_{min}$ festgestellt wird, eine Wartezeit vor oder nach der Abtastung des Aufbaumaterials entlang dieser Scanlinie eingelegt wird, wobei die Wartezeit höchstens, bevorzugt genau, der Differenz zwischen der Mindestzeitdauer $t_{min}$ und der Zeitdauer für die Abtastung dieser Scanlinie entspricht.

**5.** Verfahren nach einem der vorangehenden Ansprüche, bei dem für den Fall, dass für eine Scanlinie eine Unterschreitung der Mindestzeitdauer $t_{min}$ festgestellt wird, eine Wartezeit vor oder nach der Abtastung des Aufbaumaterials entlang dieser Scanlinie spezifiziert wird und während der Wartezeit eine Abtastung des Aufbaumaterials durch das Energiestrahlbündel entlang mindestens einer weiteren Scanlinie spezifiziert wird.

**6.** Verfahren nach einem der vorangehenden Ansprüche, bei dem die verringerte Energiedichte des Energiestrahlbündels ($E_{reduc}$) entlang einer Scanlinie gemäß der Gleichung $E_{reduc} = E_0 - (1-f(h)*h/w)*a*E_0$ festgelegt wird,

wobei $E_0$ die mittlere Energiedichte des Energiestrahlbündels an Stellen des Teilbereichs ist, an denen beim Abtasten entlang von Scanlinien die Mindestzeitdauer $t_{min}$ nicht unterschritten wird,
wobei h die Länge einer Scanlinie in einem Teilbereich ist,
wobei f(h) eine Funktion ist, die die monotone Abnahme der Energiedichte mit abnehmender Länge einer Scanlinie beschreibt,
wobei w die Abmessung des Belichtungsbereichs in Richtung der Scanlinien ist und
wobei a den Betrag beschreibt, um den die Energiedichte des Energiestrahlbündels maximal verringert werden soll.

**7.** Generatives Schichtbauverfahren zur Herstellung mindestens eines dreidimensionalen Objekts, wobei in dem generativen Schichtbauverfahren das Objekt hergestellt wird durch Aufbringen eines Aufbaumaterials Schicht auf Schicht und Verfestigen des Aufbaumaterials mittels Zufuhr von Strahlungsenergie zu allen Stellen in einer Schicht, die dem Querschnitt des Objekts in dieser Schicht entsprechen, indem diese Stellen mittels einer Energieeintragseinrichtung dergestalt mit Energiestrahlung abgetastet werden, dass die Energieeintragseinrichtung mindestens ein Energiestrahlbündel so auf vorgegebene Stellen einer Schicht des Aufbaumaterials richtet, dass durch das Energiestrahlbündel eine Verfestigung des Aufbaumaterials bewirkt wird, wobei das generative Schichtbauverfahren ein Verfahren nach einem der Ansprüche 1 bis 6 beinhaltet.

**8.** Vorrichtung zur computergestützten Bereitstellung von Steuerdaten für eine generative Schichtbauvorrichtung zur Herstellung eines dreidimensionalen Objekts, wobei das Objekt mittels der generativen Schichtbauvorrichtung hergestellt wird durch Aufbringen eines Aufbaumaterials Schicht auf Schicht und Verfestigen des Aufbaumaterials mittels Zufuhr von Strahlungsenergie zu allen Stellen in einer Schicht, die dem Querschnitt des Objekts in dieser Schicht entsprechen, indem diese Stellen mittels einer Energieeintragseinrichtung dergestalt mit Energiestrahlung abgetastet werden, dass die Energieeintragseinrichtung mindestens ein Energiestrahlbündel so auf vorgegebene Stellen einer Schicht des Aufbaumaterials richtet, dass durch das Energiestrahlbündel eine Verfestigung des Aufbaumaterials bewirkt wird, wobei die Vorrichtung aufweist:

eine Bereitstellungseinrichtung (101), die auf einen Datensatz zugreift, welcher ein Datenmodell einer Anzahl von während der Herstellung selektiv zu verfestigenden Aufbaumaterialschichten aufweist, wobei in jeder der Schichten des Datenmodells einem Objektquerschnitt entsprechende Stellen gekennzeichnet sind, an denen eine Verfestigung des Aufbaumaterials stattfinden soll,
wobei in dem Datensatz in zumindest einer, bevorzugt allen, der Schichten des Datenmodells zumindest für einen Teilbereich eines Objektquerschnitts spezifiziert ist, in welcher zeitlichen Reihenfolge ein Energiestrahlbündel in, bevorzugt parallelen, Scanlinien über die Stellen dieses Teilbereichs zur Abtastung des Aufbaumaterials zu bewegen ist,
wobei dem zumindest einen Teilbereich n Belichtungsbereiche zugeordnet werden, wobei n eine natürliche Zahl ist,
wobei es sich bei einem Belichtungsbereich um ein den Teilbereich partiell überdeckendes rechteckiges oder quadratisches Flächenelement handelt,
wobei in einem Belichtungsbereich bei der Abtastung des Aufbaumaterials mit Energiestrahlung ein Energiestrahlbündel in, bevorzugt parallelen, Scanlinien über das Aufbaumaterial in dem Teilbereich bewegt wird,
**gekennzeichnet durch** eine Datensatz-Abänderungseinheit (102), die so eingerichtet ist, dass sie den Datensatz so abändert, dass in zumindest einer, bevorzugt allen, der Schichten des Datenmodells für den Teilbereich eines Objektquerschnitts abgeprüft wird, ob die für die Abtastung des Aufbaumaterials entlang einer Scanlinie benötigte Abtastzeit eine vorgegebene Mindestzeitdauer $t_{min}$ unterschreitet und falls dies für eine Scanlinie festgestellt wird, eine verringerte Energiedichte des Energiestrahlbündels während der Abtastung des Aufbaumaterials entlang dieser Scanlinie spezifiziert wird und/oder nach dem Abtasten entlang der Scanlinie eine Wartezeit spezifiziert wird, bevor das Energiestrahlbündel entlang einer weiteren Scanlinie bewegt wird,

wobei die Mindestzeitdauer $t_{min}$ gleich dem Quotienten aus der Ausdehnung (w) des Belichtungsbereichs in der Richtung parallel zu den Scanlinien und der mittleren Bewegungsgeschwindigkeit (v) des Energiestrahlbündels entlang einer Scanlinie im Belichtungsbereich gesetzt wird, so dass eine Unterschreitung der Mindestzeitdauer $t_{min}$ daran erkennbar ist, dass die Länge einer Scanlinie (h) kleiner als die Ausdehnung (w) des Belichtungsbereichs in der Richtung parallel zu den Scanlinien ist,

wobei die verringerte Energiedichte des Energiestrahlbündels so spezifiziert wird, dass eine umso geringere Energiedichte des Energiestrahlbündels spezifiziert wird, je stärker die vorgegebene Mindestzeitdauer $t_{min}$ unterschritten wird,

und

eine Steuerdatensatz-Bereitstellungseinheit (103), die eingerichtet ist, den von der Datensatz-Abänderungseinheit (102) abgeänderten Datensatz für die Generierung eines Steuerdatensatzes für die generative Schichtbauvorrichtung bereit zu stellen.

9. Vorrichtung nach Anspruch 8 mit einer Mindestzeitdauer-Entgegennahmeeinheit, die eingerichtet ist, die Mindestzeitdauer $t_{min}$ aus einem Speicher, über ein Netzwerk oder eine Nutzereingabe entgegenzunehmen.

10. Generative Schichtbauvorrichtung zur Herstellung eines dreidimensionalen Objekts, wobei in der generativen Schichtbauvorrichtung das Objekt hergestellt wird durch Aufbringen eines Aufbaumaterials Schicht auf Schicht und Verfestigen des Aufbaumaterials mittels Zufuhr von Strahlungsenergie zu allen Stellen in einer Schicht, die dem Querschnitt des Objekts in dieser Schicht entsprechen, indem diese Stellen mittels einer Energieeintragseinrichtung dergestalt mit Energiestrahlung abgetastet werden, dass die Energieeintragseinrichtung mindestens ein Energiestrahlbündel so auf vorgegebene Stellen einer Schicht des Aufbaumaterials richtet, dass durch das Energiestrahlbündel eine Verfestigung des Aufbaumaterials bewirkt wird, wobei die generative Schichtbauvorrichtung eine Vorrichtung nach einem der Ansprüche 8 bis 9 aufweist.

11. Computerprogramm, mit Programmcodemitteln, um alle Schritte eines Verfahrens gemäß einem der Ansprüche 1 bis 6 auszuführen, wenn das Computerprogramm mittels eines Datenprozessors, insbesondere eines mit einer generativen Schichtbauvorrichtung zusammenwirkenden Datenprozessors, ausgeführt wird.

12. Computerlesbares Speichermedium, auf dem das Computerprogramm nach Anspruch 11 gespeichert ist.

**Claims**

1. A computer-based method of providing control data for a layer-wise additive manufacturing apparatus for manufacturing a three-dimensional object,

   wherein the object is manufactured by means of the layer-wise additive manufacturing apparatus by applying a building material layer by layer and by solidifying the building material by a supply of radiation energy to all positions in a layer that correspond to the cross-section of the object in this layer in that these positions are scanned with energetic radiation by means of an energy input device such that the energy input device directs at least one energy beam to predetermined positions of a building material layer so that the energy beam effects a solidification of the building material,

   said method of generating a control dataset comprising a first step (S1) of accessing a dataset that includes a data model of a number of building material layers to be selectively solidified during the manufacture, wherein in each of the layers of the data model positions corresponding to an object cross-section are marked, at which positions a solidification of the building material shall be carried out,

   wherein in the dataset in at least one layer, preferably all layers, of the data model it is specified at least for a partial region of an object cross section in which chronological order an energy beam is to be moved in, preferably parallel, scan lines across the positions of this partial region for a scanning of the building material,

   wherein n exposure regions are assigned to the at least one partial region, wherein n is a natural number,

an exposure region being a rectangular or quadratic area element that partially overlaps the partial region,

wherein in an exposure region an energy beam is moved across the building material in the partial region in, preferably parallel, scan lines, when the building material is scanned with energetic radiation,

**characterised in that** in a second step (S2) the dataset is modified such that in at least one layer, preferably all layers, of the data model for the respective partial region of an object cross section it is checked whether the scanning time needed for the scanning of the building material along a scan line falls below a predetermined minimum length of time $t_{min}$ and if this is detected for a scan line, a reduced energy density of the energy beam during the scanning of the building material along this scan line is specified and/or after the scanning along the scan line a waiting time is specified before the energy beam is moved along a further scan line,

wherein the minimum length of time $t_{min}$ is set to the quotient of the extent (w) of the exposure region in a direction which is in parallel to the scan lines and the mean velocity (v) of movement of the energy beam along a scan line in the exposure region, so that an underrun of the minimum length of time $t_{min}$ is indicated by the length of a scan line (h) being smaller than the extent (w) of the exposure region in a direction which is in parallel to the scan lines

wherein the reduced energy density of the energy beam is specified such that the more the predetermined minimum length of time $t_{min}$ is underrun, the lower the energy density of the energy beam that is specified,

and

in a third step (S3) the dataset that was modified in the second step is provided for the generation of a control dataset for the layer-wise additive manufacturing apparatus.

2. The method of claim 1, wherein in the second step (S2) it is checked, whether for two scan lines lying next to each other the predetermined minimum length of time $t_{min}$ is underrun by a different amount and if this is the case it is checked which of the two scan lines is to be scanned later in time,

wherein a first reduced energy density E1 is specified for the scan line to be scanned first and a second reduced energy density E2 is specified for the scan line to be scanned later in time,

wherein the first and second reduced energy densities E1 and E2 are specified such that for the case that a scanning time $t_{A2}$ for the scan line to be scanned later in time is smaller than a scanning time $t_{A1}$ for the scan line to be scanned first the absolute value of the difference between the first and second reduced energy densities |E1-E2| is smaller than in the case in which a scanning time $t_{A2}$ for the scan line to be scanned later in time is larger than a scanning time $t_{A1}$ for the scan line to be scanned first.

3. The method of claim 1 or 2, wherein the provided dataset includes a plurality of partial regions of a cross section in a layer, which partial regions are located above unsolidified material in the preceding layer or below material in the following layer that is not to be solidified.

4. The method of one of the preceding claims, wherein for the case that an underrun of the minimum length of time $t_{min}$ is detected for a scan line, a waiting time is inserted before or after the scanning of the building material along this scan line, wherein the waiting time corresponds at most, preferably exactly, to the difference between the minimum length of time $t_{min}$ and the length of time for the scanning of this scan line.

5. The method of one of the preceding claims, wherein for the case that for a scan line an underrun of the minimum length of time $t_{min}$ is detected, a waiting time before or after the scanning of the building material along this scan line is specified and a scanning of the building material by the energy beam along at least one further scan line is specified for the waiting time.

6. The method of one of the preceding claims, wherein the reduced energy density of the energy beam ($E_{reduc}$) along a scan line is defined according to the equation

$$E_{reduc} = E_0 - (1-f(h)*h/w)*a*E_0,$$

wherein $E_0$ is the mean energy density of the energy beam at positions of the partial region at which the minimum length of time $t_{min}$ is not underrun when scanning along the scan lines, wherein h is the length of a scan line in a partial region, wherein f(h) is a function describing the monotonic decrease of the energy density with decreasing length of a scan line, wherein w is the size of the exposure region in the direction of the scan lines and wherein a describes the maximum amount by which the energy density of the energy beam shall be decreased.

7. A layer-wise additive manufacturing method for the manufacture of at least one three-dimensional object, wherein in the layer-wise additive manufacturing method the object is manufactured by applying a building material layer by layer and by solidifying the building material by a supply of radiation energy to all positions in a layer that correspond to the cross-section of the object in this layer in that these positions are scanned with energetic radiation by means of an energy input device such that the energy input device directs at least one energy beam to predetermined positions of a building material layer so that the energy beam effects a solidification of the building material, wherein the layer-wise additive manufacturing method comprises a method of one of claims 1 to 6.

8. A device for a computer-based provision of control data for a layer-wise additive manufacturing apparatus for manufacturing a three-dimensional object, wherein the object is manufactured by means of the layer-wise additive manufacturing apparatus by applying a building material layer by layer and by solidifying the building material by a supply of radiation energy to all positions in a layer that correspond to the cross-section of the object in this layer in that these positions are scanned with energetic radiation by means of an energy input device such that the energy input device directs at least one energy beam to predetermined positions of a building material layer so that the energy beam effects a solidification of the building material, said device comprising:

a provision unit (101) that accesses a dataset that includes a data model of a number of building material layers to be selectively solidified during the manufacture, wherein in each of the layers of the data model positions corresponding to an object cross-section are marked, at which positions a solidification of the building material shall be carried out, wherein in the dataset in at least one layer, preferably all layers, of the data model it is specified at least for a partial region of an object cross section in which chronological order an energy beam is to be moved in, preferably parallel, scan lines across the positions of this partial region for a scanning of the building material, wherein n exposure regions are assigned to the at least one partial region, wherein n is a natural number, an exposure region being a rectangular or quadratic area element that partially overlaps the partial region, wherein in an exposure region an energy beam is moved across the building material in the partial region in, preferably parallel, scan lines, when the building material is scanned with energetic radiation,

**characterised by** a dataset modification unit (102) that is configured to modify a dataset such that in at least one layer, preferably all layers, of the data model for the respective partial region of an object cross section it is checked whether the scanning time needed for the scanning of the building material along a scan line falls below a predetermined minimum length of time $t_{min}$ and if this is detected for a scan line, a reduced energy density of the energy beam during the scanning of the building material along this scan line is specified and/or after the scanning along the scan line a waiting time is specified before the energy beam is moved along a further scan line, wherein the minimum length of time $t_{min}$ is set to the quotient of the extent (w) of the exposure region in a direction which is in parallel to the scan lines and the mean velocity (v) of movement of the energy beam along a scan line in the exposure region, so that an underrun of the minimum length of time $t_{min}$ is indicated by the length of a scan line (h) being smaller than the extent (w) of the exposure region in a direction which is in parallel to the scan lines, wherein the reduced energy density of the energy beam is specified such that the more the predetermined minimum length of time $t_{min}$ is underrun, the lower the energy density of the energy beam that is specified, and a control dataset provision unit (103) that is configured to provide the dataset that was modified by the dataset modification unit (102) for the generation of a control dataset for the layer-wise additive manufacturing apparatus.

9. The device of claim 8, comprising a minimum length of time receiving unit that is configured to receive the minimum length of time $t_{min}$ from a memory, via a network or from a user input.

10. A layer-wise additive manufacturing apparatus for the manufacture of at least one three-dimensional object, wherein in the layer-wise additive manufacturing apparatus the object is manufactured by applying a building material layer by layer and by solidifying the building material by a supply of radiation energy to all positions in a layer that correspond to the cross-section of the object in this layer in that these positions are scanned with energetic radiation by means of an energy input device such that the energy input device directs at least one energy beam to predetermined positions of a building material layer so that the energy beam effects a solidification of the building material, wherein the layer-wise additive manufacturing apparatus comprises a device of one of claims 8 to 9.

11. A computer program having program code means in order to perform all steps of a method according to one of claims 1 to 6 when the computer program is executed by a data processor, in particular a data processor interacting with a layer-wise additive manufacturing apparatus.

12. A computer-readable storage medium on which the computer program of claim 11 is stored.

## Revendications

1. Procédé assisté par ordinateur pour la mise à disposition de données de commande pour un dispositif de construction générative de couches pour la fabrication d'un objet tridimensionnel,

dans lequel l'objet est fabriqué au moyen du dispositif de construction générative de couches par application d'un matériau de construction couche sur couche et par solidification du matériau de construction au moyen d'introduction d'énergie de rayonnement à toutes les positions dans une couche qui correspondent à la section transversale du objet dans cette couche, en balayant ces positions au moyen d'un dispositif d'introduction d'énergie par un rayonnement d'énergie de telle sorte que le dispositif d'introduction d'énergie dirige au moins un faisceau d'énergie de rayonnement sur des positions prédéterminées d'une couche du matériau de construction de telle sorte qu'une solidification du matériau de construction soit provoquée par le faisceau d'énergie de rayonnement,

dans lequel le procédé pour la génération d'un ensemble de données de commande présente une première étape (S1) d'accès à un ensemble de données qui présente un modèle de données d'un nombre de couches du matériau de construction à solidifier sélectivement pendant la fabrication, dans lequel, dans chacune des couches du modèle de données, des positions correspondantes á une section transversale d'objet auxquelles une solidification du matériau de construction doit avoir lieu sont identifiées

dans lequel, dans l'ensemble de données, dans au moins une, de préférence toutes, des couches du modèle de données il est spécifiée au moins pour une zone partielle d'une section transversale d'objet l'ordre temporel dans lequel un faisceau d'énergie de rayonnement doit être déplacé le long des lignes de balayage, de préférence parallèles, á travers des positions de ces zones partielles pour le balayage du matériau de construction,

dans lequel n zones d'exposition sont associées à l'au moins une zone partielle, n étant un nombre naturel,

dans lequel il s'agit, pour une zone d'exposition, d'un élément de surface rectangulaire ou carré partiellement recouvrant la zone partielle,

dans lequel, dans une zone d'exposition, lors du balayage du matériau de construction par un rayonnement d'énergie, un faisceau d'énergie de rayonnement est déplacé le long des lignes de balayage, de préférence parallèles, à travers le matériau de construction dans la zone partielle,

**caractérisé en ce que**, dans une deuxième étape (S2), l'ensemble de données est modifié de telle sorte que, dans au moins une, de préférence toutes, des couches du modèle de données il est vérifié pour la zone partielle respective d'une section transversale d'objet, si le temps de balayage nécessaire pour le balayage du matériau de construction le long d'une ligne de balayage est inférieur à une durée minimale $t_{min}$ prédéfinie, et si cela est constaté pour une ligne de balayage, il est spécifié soit une densité d'énergie réduite du faisceau d'énergie de rayonnement pendant le balayage du matériau de construction le long de cette ligne de balayage, et/ou, après le balayage le long de la ligne de balayage, il est spécifié une durée d'attente avant que le faisceau d'énergie de rayonnement ne soit déplacé le long d'une autre ligne de balayage,

dans lequel la durée minimale $t_{min}$ est fixé au quotient de l'extension (w) de la zone d'exposition dans la direction parallèle aux lignes de balayage et de la vitesse de déplacement moyenne (v) du faisceau d'énergie de rayonnement le long d'une ligne de balayage dans la zone d'exposition, de sorte qu'une non-atteinte de la durée minimale $t_{min}$ peut être détectée par le fait que la longueur d'une ligne de balayage (h) est inférieure à l'extension (w) de la zone d'exposition dans la direction parallèle aux lignes de balayage,

dans lequel la densité d'énergie réduite du faisceau d'énergie de rayonnement est spécifiée de sorte qu'une densité d'énergie plus faible du faisceau d'énergie de rayonnement est spécifiée, plus la durée minimale prédéterminée $t_{min}$ n'est pas atteinte, et

dans une troisième étape (S3), l'ensemble de données modifié dans la deuxième étape est mis à disposition pour la génération d'un ensemble de données de commande pour le dispositif de construction générative de couches.

2. Procédé selon la revendication 1, dans lequel, dans la deuxième étape (S2), il est vérifié si, pour deux lignes de balayage situées l'une à côté de l'autre, la durée minimale prédéterminée $t_{min}$ n'est pas atteinte de manière différente, et si cela est le cas, il est examiné quelle des deux lignes de balayage doit être balayée plus tard dans le temps,

dans lequel, pour la ligne de balayage balayée plus tôt dans le temps, une première densité d'énergie réduite E1 est spécifiée et, pour la ligne de balayage balayée plus tard dans le temps, une deuxième densité d'énergie réduite E2 est spécifiée,

dans lequel les première et deuxième densités d'énergie réduites E1 et E2 sont spécifiées de telle sorte que, dans le cas dans lequel un temps de balayage $t_{A2}$ pour la ligne de balayage balayée plus tard dans le temps est inférieur à un temps de balayage $t_{A1}$ pour la ligne de balayage balayée plus tôt dans le temps, la valeur absolue de la différence entre les première et deuxième densités d'énergie réduites |E1-E2| est inférieure à celle dans le cas dans lequel un temps de balayage $t_{A2}$ pour la ligne de balayage balayée plus tard dans le temps est supérieur à un temps de balayage $t_{A1}$ pour la ligne de balayage balayée tôt dans le temps.

**3.** Procédé selon la revendication 1 ou 2, dans lequel l'ensemble de données mis à disposition présente une pluralité de zones partielles d'une section transversale dans une couche, qui sont situées au-dessus d'un matériau non solidifié dans la couche précédente ou en dessous d'un matériau ne devant pas être solidifié dans la couche suivante.

**4.** Procédé selon l'une des revendications précédentes, dans lequel, si pour une ligne de balayage, une non-atteinte de la durée minimale $t_{min}$ est constaté, un temps d'attente avant ou après le balayage du matériau de construction le long de cette ligne de balayage est appliqué, dans lequel le temps d'attente est maximalement, de préférence exactement, égal à la différence entre la durée minimale $t_{min}$ et la durée pour le balayage de cette ligne de balayage.

**5.** Procédé selon l'une des revendications précédentes, dans lequel, si pour une ligne de balayage, une non-atteinte de la durée minimale $t_{min}$ est constaté, un temps d'attente avant ou après le balayage du matériau de construction le long de cette ligne de balayage est spécifié et, pendant le temps d'attente, un balayage du matériau de construction par le faisceau d'énergie de rayonnement le long d'au moins une autre ligne de balayage est spécifié.

**6.** Procédé selon l'une des revendications précédentes, dans lequel la densité d'énergie réduite des faisceaux d'énergie de rayonnement ($E_{reduc}$) le long d'une ligne de balayage est déterminée selon l'équation

$$E_{reduc} = E_0 - (1-f(h)*h/w)*a*E_0 ,$$

dans laquelle $E_0$ est la densité d'énergie moyenne du faisceau d'énergie de rayonnement à une position des zones partielles, à laquelle, lors du balayage le long de lignes de balayage, la durée minimale $t_{min}$ n'est pas atteinte,
dans laquelle h est la longueur d'une ligne de balayage dans une zone partielle,
dans laquelle f(h) est une fonction qui décrit la diminution monotone de la densité d'énergie avec la longueur décroissante d'une ligne de balayage,
dans laquelle w est la dimension de la zone d'exposition dans la direction des lignes de balayage et
dans laquelle a décrit une valeur absolue par laquelle la densité d'énergie du faisceau d'énergie de rayonnement doit être réduite au maximum.

**7.** Procédé de construction générative de couches pour la fabrication d'au moins un objet tridimensionnel, dans lequel l'objet est fabriqué dans le procédé de construction générative de couches par application d'un matériau de construction couche sur couche et par solidification du matériau de construction au moyen d'introduction d'énergie de rayonnement à toutes les positions dans une couche qui correspondent à la section transversale du objet dans cette couche, en balayant ces positions au moyen d'un dispositif d'introduction d'énergie par un rayonnement d'énergie de telle sorte que le dispositif d'introduction d'énergie dirige au moins un faisceau d'énergie de rayonnement sur des positions prédéterminées d'une couche du matériau de construction de telle sorte qu'une solidification du matériau de construction soit provoquée par le faisceau d'énergie de rayonnement, dans lequel le procédé de construction générative de couches comprend un procédé selon l'une des revendications 1 à 6.

**8.** Dispositif pour la mise à disposition assistée par ordinateur de données de commande pour un dispositif de construction générative de couches pour la fabrication d'un objet tridimensionnel, dans lequel l'objet est fabriqué au moyen du dispositif de construction générative de couches par application d'un matériau de construction couche sur couche et par solidification du matériau de construction au moyen d'introduction d'énergie de rayonnement à toutes les positions dans une couche qui correspondent à la section transversale du objet dans cette couche, en balayant ces positions au moyen d'un dispositif d'introduction d'énergie par un rayonnement d'énergie de telle sorte que le dispositif d'introduction d'énergie dirige au moins un faisceau d'énergie de rayonnement sur des positions prédéterminées d'une couche du matériau de construction de telle sorte que une solidification du matériau de construction soit provoquée par le faisceau d'énergie de rayonnement, dans lequel le dispositif présente :

une installation de mise à disposition (101) qui accède à un ensemble de données qui présente un modèle de données d'un nombre couches du matériau de construction à solidifier sélectivement pendant la fabrication, dans lequel, dans chacune des couches du modèle de données, des positions correspondantes á une section transversale d'objet auxquelles une solidification du matériau de construction doit avoir lieu sont identifiées,

dans lequel, dans l'ensemble de données, dans au moins une, de préférence toutes, des couches du modèle de données il est spécifiée au moins pour une zone partielle d'une section transversale d'objet l'ordre temporel dans lequel un faisceau d'énergie de rayonnement doit être déplacé le long des lignes de balayage, de préférence parallèles, á travers des positions de ces zones partielles pour le balayage du matériau de construction,

dans lequel n zones d'exposition sont associées à l'au moins une zone partielle, n étant un nombre naturel,

dans lequel il s'agit, pour une zone d'exposition, d'un élément de surface rectangulaire ou carré partiellement recouvrant la zone partielle,

dans lequel, dans une zone d'exposition, lors du balayage du matériau de construction par un rayonnement d'énergie, un faisceau d'énergie de rayonnement est déplacé le long des lignes de balayage, de préférence parallèles, à travers le matériau de construction dans la zone partielle,

**caractérisé par** une unité de modification d'ensemble de données (102) qui est conçue de telle sorte qu'elle modifie l'ensemble de données de telle sorte que, dans au moins une, de préférence toutes, des couches du modèle de données il est vérifié pour la zone partielle d'une section transversale d'objet, si le temps de balayage nécessaire pour le balayage du matériau de construction le long d'une ligne de balayage est inférieur à une durée minimale $t_{min}$ prédéfinie, et si cela est constaté pour une ligne de balayage, il est spécifié une densité d'énergie réduite du faisceau d'énergie de rayonnement pendant le balayage du matériau de construction le long de cette ligne de balayage, et/ou, après le balayage le long de la ligne de balayage, il est spécifié une durée d'attente avant que le faisceau d'énergie de rayonnement ne soit déplacé le long d'une autre ligne de balayage,

dans lequel la durée minimale $t_{min}$ est fixé au quotient de l'extension (w) de la zone d'exposition dans la direction parallèle aux lignes de balayage et de la vitesse de déplacement moyenne (v) du faisceau d'énergie de rayonnement le long d'une ligne de balayage dans la zone d'exposition, de sorte qu'une non-atteinte de la durée minimale $t_{min}$ peut être détectée par le fait que la longueur d'une ligne de balayage (h) est inférieure à l'extension (w) de la zones d'exposition dans la direction parallèle aux lignes de balayage,

dans lequel la densité d'énergie réduite du faisceau d'énergie de rayonnement est spécifiée de sorte qu'une densité d'énergie plus faible du faisceau d'énergie de rayonnement est spécifiée, plus la durée minimale prédéterminée $t_{min}$ n'est pas atteinte, et

une unité de mise à disposition d'ensemble de données de commande (103), qui est conçue pour mettre à disposition l'ensemble de données modifié par l'unité de modification d'ensemble de données (102) pour la génération d'un ensemble de données de commande pour le dispositif de construction générative de couches.

9. Dispositif selon la revendication 8, comprenant une unité de réception de durée minimale, qui est conçue pour recevoir la durée minimale $t_{min}$ à partir d'une mémoire, par l'intermédiaire d'un réseau ou d'une entrée d'utilisateur.

10. Dispositif de construction générative de couches pour la fabrication d'un objet tridimensionnel, dans lequel l'objet est fabriqué dans le dispositif de construction générative de couches par application d'un matériau de construction couche sur couche et par solidification du matériau de construction au moyen d'introduction d'énergie de rayonnement à toutes les positions dans une couche qui correspondent à la section transversale du objet dans cette couche, en balayant ces positions au moyen d'un dispositif d'introduction d'énergie par un rayonnement d'énergie de telle sorte que le dispositif d'introduction d'énergie dirige au moins un faisceau d'énergie de rayonnement sur des positions prédéterminées d'une couche du matériau de construction de telle sorte que une solidification du matériau de construction soit provoquée par le faisceau d'énergie de rayonnement, dans lequel le dispositif de construction générative de couches comprend un dispositif selon l'une des revendications 8 à 9.

11. Programme informatique, avec des moyens de code de programme, pour exécuter toutes les étapes d'un procédé selon l'une des revendications 1 à 6, lorsque le programme informatique est exécuté au moyen d'un processeur de données, en particulier d'un processeur de données coopérant avec un dispositif de construction générative de couches.

12. Support de stockage lisible par ordinateur, sur lequel est stocké le programme informatique selon la revendication 11.

**Fig. 1**

Fig. 2

Fig. 3

**Fig. 4**

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015091875 A1
- DE 19606128 A1
- DE 10042134 A1